# EUROPÄISCHE PATENTSCHRIFT

(11) **EP 4 461 630 B1**
(45) Veröffentlichungstag und Bekanntmachung des Hinweises auf die Patenterteilung: **05.11.2025**
(21) Anmeldenummer: 24173775.8
(22) Anmeldetag: 02.05.2024
(51) Int. Cl.: B62J 9/23, B62J 9/27

(54) **FAHRRADTASCHE MIT KLAPPHAKEN**
BICYCLE BAG WITH FOLDING HOOK
SACOCHE DE BICYCLETTE AVEC CROCHET PLIANT

(30) Priorität: 03.05.2023 DE 202023102394 U; 06.07.2023 DE 202023103765 U
(43) Veröffentlichungstag der Anmeldung: 13.11.2024
(73) Patentinhaber: tubus carrier systems GmbH, 48157 Münster (DE)
(72) Erfinder: Rittscher, Viktor, 48145 Münster (DE)
(74) Vertreter: Patentanwälte Olbricht Buchhold Keulertz

(56) Entgegenhaltungen:
- EP-A1- 0 655 385
- EP-B1- 2 552 767
- EP-B1- 3 121 098
- DE-B4- 102015 008 780
- US-A1- 2015 197 301

## Beschreibung

Die Erfindung betrifft eine Fahrradtasche mit Klapphaken. Im Rahmen des vorliegenden Vorschlags wird der Begriff der Fahrradtasche für ein Gepäckstück verwendet, welches Haltemittel aufweist, die dazu bestimmt sind, das Gepäckstück an einem Fahrrad zu halten, typischerweise an einer stangen- oder rohrartigen Strebe des Fahrrads, insbesondere an einem Gepäckträger des Fahrrads. Dabei umfasst der Begriff der Fahrradtasche Gepäckstücke mit einem weichen, verformbaren, z. B. textilen Gehäuse oder auch mit einem harten, formstabilen Gehäuse, das auch als Koffer bezeichnet werden kann. Der Begriff der Fahrradtasche umfasst Gepäckstücke, die ringsum geschlossen werden können, z. B. mittels einer Lasche, eines Rollverschlusses oder eines beweglichen Deckels, oder auch solche Gepäckstücke, die oben offen sind und auch als Wanne oder als Korb bezeichnet werden können. Das Material des Gehäuses kann eine geschlossene Fläche bilden, z. B. als Laminat, als Spritzguss- oder Tiefziehteil aus Kunststoff oder Metall, oder es kann feinporige Durchbrechungen aufweisen wie z. B. ein textiles Material, oder es kann grobporige Durchbrechungen aufweisen wie z. B. ein Gittermaterial aus Metall oder Kunststoff oder ein aus Naturfasern geflochtenes Material.

Aus der DE 10 2015 008 780 B4 ist eine Fahrradtasche gemäß der Präambel von Anspruch 1 bekannt. Aus der DE 20 2015 104 085 U1 ist ein an einen Fahrrad-Gepäckträger anschließbares Gepäckstück bekannt, also eine Fahrradtasche. Dabei sind Haken feststehend an der Fahrradtasche angeordnet. Riegel sind beweglich und sichern die Tasche an der jeweiligen Strebe des Gepäckträgers, an welche die Fahrradtasche mittels der Haken angehängt ist. Die Riegel können in eine Freigabestellung bewegt werden, so dass die Fahrradtasche von der Strebe abgenommen werden kann.

Aus der EP 3 121 098 B1 ist eine Fahrradtasche als Gepäckstück eines Fahrrad-Gepäckträgersystems bekannt. Die Fahrradtasche ist mit einem beweglichen Haken ausgestattet, der im Rahmen des vorliegenden Vorschlags als Klapphaken bezeichnet wird, wobei die Bezeichnung "Klapphaken" unabhängig von der Art der Beweglichkeit verwendet ist. Dieser bekannte Klapphaken weist zwei Teile auf: einen Außenhaken, der von dem Innenraum der Tasche weiter entfernt verläuft, und einen Innenhaken, der dem Innenraum der Tasche näher ist. Mit seinen beiden Hakenteilen kann der Klapphaken eine Stange (z. B. Strebe des Fahrradgepäckträgers) umgreifen. Beide Hakenteile sind beweglich. In einer Arbeitsstellung, die auch als Haltestellung bezeichnet ist, ist der Klapphaken nach unten hin offen, so dass er von oben auf die erwähnte Strebe des Gepäckträgers aufgesetzt und somit die Fahrradtasche an den Gepäckträger angehängt werden kann. In seiner Ruhestellung dient der Klapphaken nicht dazu, die Tasche an einer Strebe zu halten, vielmehr taucht in dieser Ruhestellung der Außenhaken, der gebogen verläuft, mit seiner Spitze in die Fahrradtasche ein, so dass er nicht an der Kleidung oder anderen Gegenständen außerhalb der Tasche hängenbleiben kann. Mittels eines Zugelements, welches auf beide Hakenteile wirkt, kann der Klapphaken ausgeklappt werden, wobei während der Klappbewegung sowohl der Außen- als auch der Innenhaken bewegt werden. Da beide Hakenteile des Klapphaken beweglich sind, werden die Bezeichnungen der Arbeits- bzw. Haltestellung und der Ruhestellung sowohl für den Klapphaken insgesamt als auch für die beiden Hakenteile angewendet.

Ausgehend von diesem letztgenannten Stand der Technik liegt der Erfindung die Aufgabe zugrunde, den beweglichen Klapphaken besonders flach auszugestalten, so dass in der Ruhestellung des Klapphakens ein Überstand, mit dem der Klapphaken über die Außenkontur der Tasche hinausragt, möglichst gering gehalten oder sogar völlig vermieden wird.

Diese Aufgabe wird durch eine Fahrradtasche nach Anspruch 1 gelöst. Vorteilhafte Ausgestaltungen sind in den Unteransprüchen beschrieben.

Die Erfindung schlägt eine Fahrradtasche vor, die mindestens einen Klapphaken aufweist, welcher wiederum einen ersten und zweiten Hakenteil aufweist. In der Praxis hat sich die Anordnung von zwei Klapphaken an einer Fahrradtasche bewährt, so dass nachfolgend regelmäßig "die Klapphaken" erwähnt werden. Je nach Größe der Fahrradtasche und je nach Breite des einen oder der mehreren Klapphaken können jedoch auch ein einziger oder mehr als zwei Klapphaken verwendet werden.

Der erste Hakenteil ist in Bezug zur Tasche schwenkbar, und der zweite Hakenteil ist sowohl in Bezug zur Tasche als auch in Bezug zum ersten Hakenteil beweglich. Beide Hakenteile lassen sich mittels eines Betätigungselements aus einer Ruhestellung in eine Gebrauchsstellung bewegen, so dass insgesamt der Klapphaken wahlweise eine Ruhestellung oder eine Gebrauchsstellung einnimmt. In der Gebrauchsstellung begrenzen die Hakenteile eine nach unten offene Aufnahme für eine Stange wie z. B. die Strebe eines Fahrradgepäckträgers. Dabei ist erfindungsgemäß vorgesehen, dass der zweite Hakenteil entlang einer Führung geführt verschiebbar ist und ein Ende des zweiten Hakenteils am ersten Hakenteil angelenkt ist. Erfindungsgemäß ist somit ein Hakenteil entlang einer Führung geführt verschiebbar, um einen anderen Hakenteil zwischen der Ruhestellung und der Gebrauchsstellung zu bewegen.

In einer Ausgestaltung sind beide Hakenteile jeweils schwenkbar, und zudem schließen sie gelenkig aneinander an, wobei die beiden Schwenkachsen sowie die Gelenkachse parallel zueinander verlaufen. Da der zweite Hakenteil verschiebbar ist und somit der Abstand zwischen den beiden Schwenkachse veränderlich ist, bewirkt eine Verschiebung des zweiten Hakenteils eine Relativbewegung der beiden Hakenteile zueinander um das Gelenk. Dabei können die beiden Schwenkachsen voneinander entfernt werden, so dass die beiden Hakenteile in eine annähernd lineare Ausrichtung gebracht werden, in welcher sie ihre Ruhestellung einnehmen. Bei Annäherung der beiden Schwenkachsen werden die beiden Hakenteile in eine annähernd V-förmige Ausrichtung zueinander gebracht, in welcher sie ihre Haltestellung einnehmen. Insbesondere wenn eines oder sogar beide Hakenteile gebogen verlaufen, können Sie gemeinsam in der Haltestellung eine annähernd U-förmige Aufnahme bilden, in welcher eine Strebe eines Fahrrad Gepäckträgers aufgenommen werden kann.

In einer Ausgestaltung ist die Gelenkachse zwischen den beiden Schwenkachsen nach außen versetzt zu einer gedachten Verbindungslinie angeordnet, die zwischen den beiden Schwenkachsen der beiden Hakenteile verläuft. Dies ermöglicht eine konstruktiv einfache Ausgestaltung der Fahrradtasche, indem der zweite Hakenteil des Klapphakens entlang einer geradlinig linear verlaufenen Führung verschoben wird. Der Versatz nach außen, also in der vom Innenraum der Tasche abgewandten Richtung, verhindert bei einer Krafteinleitung auf den zweiten Hakenteil, um die beiden Schwenkachsen aneinander anzunähern, eine Blockade des Klapphakens in Art eines Totpunkts, der sich ergeben könnte, wenn die Gelenkachse genau zwischen den beiden Schwenkachsen und auf der Bahnlinie befindet, entlang welcher Bahn die Schwenkachse des zweiten Hakenteils bewegt werden soll.

Eine mechanisch stabile Verbindung der beiden Hakenteile kann durch die Ausgestaltung des einen Hakenteils als Gabel mit zwei Gabelzinken und durch die Ausgestaltung des anderen Hakenteils als Haken erreicht werden, der sich zwischen die Gabelzinken erstreckt. Die gelenkige Verbindung der beiden Hakenteile wird durch eine Gelenkachse erreicht, die dort durch beide Hakenteile verläuft, wo sich der Haken zwischen den Gabelzinken befindet. Diese mechanische Stabilität ist vorteilhaft angesichts der Belastungen, die auf den Klapphaken einwirken, wenn die Fahrradtasche samt darin enthaltener Ladung an einem Fahrrad-gepäckträger hängt.

Der als Haken ausgestaltete Hakenteil ist durch das Gelenk in zwei Abschnitte aufgeteilt: der eine Abschnitt verläuft vom Gelenk bis zur Schwenkachse des Hakens, und der andere Abschnitt verläuft vom Gelenk bis zu einem freien Ende des Hakens. Dieser zweite Abschnitt verläuft gebogen oder abgewinkelt und bildet zusammen mit dem als Gabel ausgestalteten Hakenteil die oben erwähnte Aufnahme für die Strebe eines Gepäckträgers. Der gebogene Abschnitt des Hakens verläuft in einer Ausgestaltung in der Art, dass er nach innen verläuft, wenn sich der gesamte Klapphaken und somit auch der als Haken ausgestaltete Hakenteil in seiner Ruhestellung befindet. Auf diese Weise wird ein Kontakt mit dem freien Ende dieses Hakenteils vermieden, wenn die Fahrradtasche nicht am Gepäckträger, sondern von einer Person getragen wird, so dass das freie Ende dieses Hakenteils weder eine unerwünschte, punktuelle Druckbelastung verursachen kann noch an der Kleidung der Person oder an anderen Gegenständen hängen bleiben kann.

Zur Führung des zweiten Hakenteils ist in einer Ausgestaltung der Fahrradtasche die Schwenkachse als körperliches Achsbauteil verwirklicht und dieses erstreckt sich über den Hakenteil hinaus und greift in einen Führungsschlitz ein, welche die Führung für diesen Hakenteil bildet. Eine besonders zuverlässige Führung und eine hohe mechanische Belastbarkeit des Klapphakens kann dadurch unterstützt werden, dass die Schwenkachse beiderseits des verschiebbaren Hakenteils in jeweils einen dort verlaufenen Führungsschlitz eingreift.

Die Schwenkachse eines Hakenteils kann beispielsweise als durchgehender Achskörper ausgestaltet sein, z.B. in Form eines metallischen Drahtstiftes. In einer Ausgestaltung ist die Schwenkachse durch zwei Achsstummel gebildet, die somit zwei Halbachsen der Schwenkachse bilden. Dies bietet konstruktive Freiheiten, da der Zwischenraum zwischen den beiden Halbachsen anderweitig genutzt werden kann und nicht durch die Anwesenheit eines durchgehenden Achskörpers beeinträchtigt ist.

In einer Ausgestaltung nimmt der Klapphaken automatisch seine Ruhestellung ein, so dass ein versehentlicher, unerwünschter Überstand auf der Rückseite der Fahrradtasche, den ansonsten der Klapphaken darstellen könnte, zuverlässig vermieden wird. Eine Rückholfeder wirkt zu diesem Zweck auf einen Hakenteil ein und drängt diesen in seiner Ruhestellung. Durch den gelenkigen Anschluss an den anderen Hakenteil wird auch dieser andere Hakenteil - und so der gesamte Klapphaken - automatisch in seiner Ruhestellung bewegt. Um den Klapphaken in seine Gebrauchsstellung oder Haltestellung zu bringen, ist ein Betätigungselement vorgesehen, welches an einen Hakenteil anschließt, so dass dieser Hakenteil mittels des Betätigungselements bewegt werden kann.

Zugunsten geringer Betätigungskräfte kann das Betätigungselement an den Hakenteil anschließen, auf den die Rückholfeder einwirkt, und aus demselben Grund kann die Rückholfeder auf den verschiebbaren zweiten Hakenteil einwirken.

Das Betätigungselement ist in einer Ausgestaltung in an sich bekannter Weise als Zugseil ausgestaltet, so dass es optisch und haptisch an den Charakter der Fahrradtasche angepasst werden kann. Außerdem kann es ein hohes Maß an Funktionssicherheit gewährleisten: das Zugseil kann außen an der Rückwand der Fahrradtasche angeordnet sein und kommt erwartungsgemäß bei der Handhabung der Fahrradtasche regelmäßig mit dem Gepäckträger in Kontakt. Im Unterschied zu einem starren Betätigungselement in Form eines Bügels oder dergleichen ist das Zugseil unempfindlich gegen solche Kontakte und verformt sich nicht in einer Weise, die eine anschließende Handhabung des Betätigungselements erschweren würde.

Die Klapphaken sind an der Tasche angeordnet, so dass die Tasche an einen Gepäckträger angehängt werden kann. In Art einer Umkehr des Befestigungsprinzips kann jedoch ebenfalls die der Erfindung zugrunde liegende Aufgabe gelöst werden, indem die Klapphaken, die zur Befestigung der Fahrradtasche am Gepäckträger des Fahrrads dienen, nicht an der Tasche, sondern am Gepäckträger angeordnet sind. In der Rückseite der Tasche sind in diesem Fall des umgekehrten Befestigungsprinzips lediglich Aufnahmen für die Klapphaken erforderlich, beispielsweise in Form von Vertiefungen, die als Einbuchtungen, Mulden oder dergleichen bezeichnet werden können und deren Kontur beispielsweise nach oben abgewinkelt verlaufen kann, um die nach oben gebogenen Klapphaken des Gepäckträgers aufnehmen und die Tasche formschlüssig am Gepäckträger halten zu können. Am Gepäckträger kann eine Haken-Baugruppe angeordnet sein, die dem Funktionsprinzip der erfindungsgemäß vorgesehenen Klapphaken entspricht und lediglich durch konstruktive Anpassungen für die Verwendung am Gepäckträger optimiert ist.

Alternativ dazu können jedoch am Gepäckträger Klapphaken angeordnet sein, die nach einem anderen als dem erfindungsgemäßen Funktionsprinzip beweglich sind. Beispielsweise können Schieber vorgesehen sein, die in Längsrichtung des Gepäckträgers beweglich sind, z.B. in den beiden seitlichen Elementen, die als Schienen / Streben / Längstraversen des Gepäckträgers bezeichnet werden können. Über Schrägflächen können solche Schieber die Klapphaken seitlich nach außen in deren Arbeitsstellung drängen oder in die Schienen / Streben / Längstraversen des Gepäckträgers hineinziehen.

Wesentlich ist in diesem Zusammenhang einer Umkehr des Befestigungsprinzips, dass die Klapphaken am Gepäckträger zwischen einer ausgefahrenen Arbeitsstellung und einer eingezogenen Ruhestellung beweglich sind. Dies ist erstens aus ästhetischen Gründen sowie hinsichtlich eventueller Verletzungsgefahren vorteilhaft, indem durch die Klapphaken geschaffene Überstände am Gepäckträger vermieden werden können, wenn die Klapphaken nicht benötigt werden und keine Tasche an den Gepäckträger angehängt werden soll. Zweitens kann es überraschenderweise jedoch auch dann vorteilhaft sein, die Klapphaken in die Ruhestellung zu bewegen, wenn eine Tasche an den Gepäckträger angehängt werden soll. Durch die in ihrer Ruhestellung eingezogenen Klapphaken kann nämlich sichergestellt werden, dass systemfremde Fahrradtaschen, die selbst mit Haken versehen sind, an den Gepäckträger angehängt werden können, und dass nicht etwa die in ihre Arbeitsstellung ausgefahrenen Klapphaken des Gepäckträgers eine Störkontur schaffen, welche die Verwendung systemfremder Fahrradtaschen verhindert.

In einer Ausgestaltung weist die Fahrradtasche einen Riegel auf, der zwischen einer Gebrauchsstellung und einer Ruhestellung beweglich ist und dazu dient, die Fahrradtasche an dem Gepäckträger zu sichern. Die Hakenteile schaffen in ihrer Gebrauchsstellung eine nach unten offene Aufnahmekontur, die zur Aufnahme einer Strebe des Gepäckträgers bestimmt ist, so dass die Fahrradtasche in an sich bekannter Weise von oben auf die Strebe gehängt werden kann. Der Riegel begrenzt, wenn er sich in seiner Gebrauchsstellung befindet, diese Aufnahmekontur nach unten, so dass durch den Riegel die Fahrradtasche an der Strebe des Gepäckträgers gegen abhebende Kräfte gesichert ist. Der Riegel kann aus seiner Gebrauchsstellung in eine Ruhestellung bewegt werden, in welcher er die nach unten offene Aufnahmekontur weniger oder gar nicht begrenzt. Die Aufnahmekontur wird dadurch nach unten so weit geöffnet, dass sie für die Strebe des Gepäckträgers offen ist und die Fahrradtasche von der Strebe des Gepäckträgers abgehoben werden kann - oder in umgekehrter Bewegungsrichtung die Aufnahmekontur auf die Strebe des Gepäckträgers abgesenkt und so die Fahrradtasche an den Gepäckträger angehängt werden kann.

In einer Ausgestaltung erfolgt die Betätigung des Riegels, nämlich seine Bewegung zwischen der Gebrauchsstellung und der Ruhestellung, automatisch, indem der Riegel gemeinsam mit den Hakenteilen beweglich ist und mit wenigsten einem der Hakenteile verbunden ist. Beispielsweise kann der Riegel durch ein Gelenk oder einen Schiebebeschlag an den betreffenden Hakenteil anschließen. Die Verbindung mit dem Hakenteil ist so ausgestaltet, dass der Riegel in seine Gebrauchsstellung bewegt wird, wenn die Hakenteile in ihre Gebrauchsstellung bewegt werden und dass der Riegel in seine Ruhestellung bewegt wird, wenn die Hakenteile in ihre Ruhestellung bewegt werden.

Der Riegel kann im Falle dieser mit den Hakenteilen gekoppelten Bewegung jedoch auch zusätzlich betätigt werden, nämlich aus seiner Gebrauchsstellung in seine Ruhestellung bewegt werden, während sich die Hakenteile in ihrer Gebrauchsstellung befinden. So kann, bevor die Fahrradtasche an den Gepäckträger angehängt wird, sichergestellt werden, die Hakenteile auf die Strebe des Gepäckträgers abgesenkt werden können und die in ihrer nach unten offenen Aufnahmekontur die Strebe aufnehmen können, ohne dass die Aufnahmekontur durch den Riegel versperrt ist. Auch später, wenn die Fahrradtasche noch an der Strebe des Gepäckträgers hängt, kann der Riegel unabhängig von der Bewegung der Hakenteile betätigt werden, um zunächst die Aufnahmekontur nach unten zu öffnen, so dass die Fahrradtasche von dem Gepäckträger abgenommen werden kann, während sich die Hakenteile noch in ihrer Gebrauchsstellung befinden und bevor sie in ihre Ruhestellung bewegt werden. Der Riegel wird bei diesen Betätigungen, die unabhängig von den Bewegungen der Hakenteile erfolgen, gegen die Wirkung eines Rückstellelements bewegt, z. B. gegen die Abstoßkraft eines Magneten, gegen einen federelastisch beweglichen Abschnitt eines anderen Bauteils der Hakenbaugruppe oder gegen eine eigens vorgesehene, auf den Riegel einwirkende Rückstellfeder, die den Riegel in seine Gebrauchsstellung drängt.

In einer Ausgestaltung schließt der Riegel gelenkig an einen Hakenteil an.

Die Fahrradtasche weist in einer Ausgestaltung ein Begrenzungselement auf, welches den Verschiebeweg des zweiten Hakenteils entlang der Führung begrenzt. Dabei ist das Begrenzungselement in der Art einstellbar, dass in unterschiedlichen Stellungen des Begrenzungselements der Verschiebeweg des zweiten Hakenteils unterschiedlich lang ist. Beispielsweise kann das Begrenzungselement als Exzenter ausgestaltet sein, dessen Umfangsfläche kontinuierlich oder in Stufen unterschiedliche Abstände zu einer Drehachse des Exzenters aufweist. Wenn der Exzenter um seine Achse gedreht wird, reicht er mit seiner Umfangsfläche unterschiedlich nah an den zweiten Hakenteil heran und begrenzt auf diese Weise den Verschiebeweg des zweiten Hakenteils unterschiedlich stark. Oder das Begrenzungselement kann als Schieber ausgestaltet sein, mit einer schrägen oder in mehreren Stufen ausgestalteten Fläche, die dem zweiten Hakenteil zugewandt ist, so dass je nach Schiebestellung des Schiebers das zweite Hakenteil unterschiedlich weit, nämlich jeweils bis an das Begrenzungselement heran, verschoben werden kann.

Aus der Begrenzung des Verschiebewegs des zweiten Hakenteils ergeben sich unterschiedliche Öffnungsweiten des Klapphakens, so dass die nach unten offene, im Wesentlichen U-förmige Aufnahmekontur, die durch die beiden Hakenteile in deren Gebrauchsstellung geschaffen wird, an den Durchmesser einer Strebe angepasst werden kann, an welche die Fahrradtasche angehängt werden soll. Dies dient erstens einer möglichst klapperfreien Halterung der Fahrradtasche an dem Gepäckträger. Zweitens kann durch die Begrenzung der Weite der Aufnahmekontur auch die Funktion des erwähnten Riegels unterstützt werden, falls die Fahrradtasche einen solchen Riegel aufweist: Dadurch, dass die Weite der Aufnahmekontur verringert wird, können Streben mit geringem Durchmesser auch dann zwischen dem Riegel und einem Hakenteil gesichert werden, wenn der Riegel nicht lückenlos an den Hakenteil anschließt, indem nämlich die Lücke aufgrund der verringerten Weite der Aufnahmekontur ebenfalls verringert ist, um eine Passage der Strebe durch die Lücke zu verhindern.

Betreffend die erfindungsgemäße Ausgestaltung einer Tasche, bei welcher ein Hakenteil entlang einer Führung geführt verschiebbar ist, um einen anderen Hakenteil zwischen einer Ruhestellung und einer Gebrauchsstellung zu bewegen, wird die Erfindung anhand der rein schematischen Darstellungen nachfolgend näher erläutert. Dabei zeigt
- Fig. 1: eine perspektivische Ansicht auf eine Hakenanordnung in ihrer Ruhestellung, mit einem ersten Ausführungsbeispiel von Haken,
- Fig. 2: aus einer Perspektive ähnlich Fig. 1 die Hakenanordnung von Fig. 1 in ihrer Arbeitsstellung,
- Fig. 3 bis 10: verschiedene Ansichten auf ein zweites Ausführungsbeispiel eines Hakens sowie einer mit zwei solchen Haken ausgestatteten Fahrradtasche, und die
- Fig. 11 bis 22: perspektivische Ansichten auf ein drittes Ausführungsbeispiel einer Hakenanordnung.

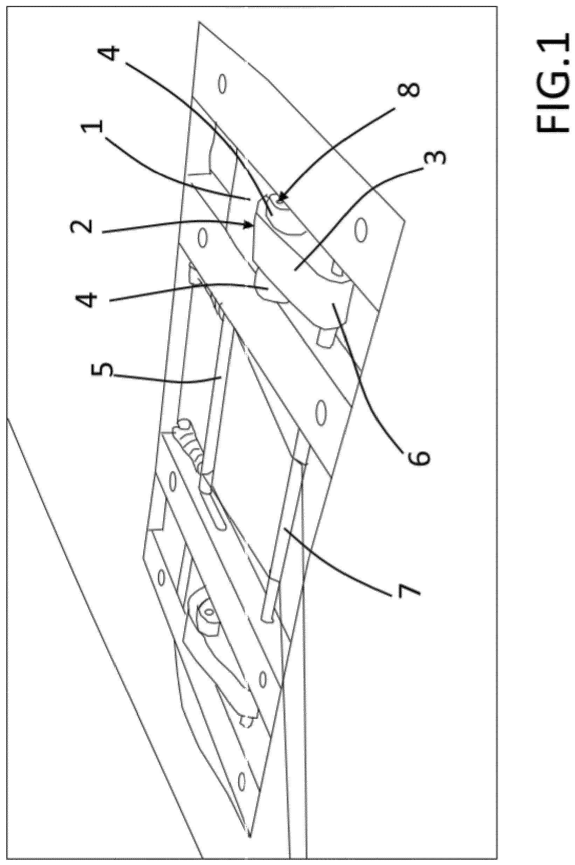

Fig. 1 zeigt als erstes Ausführungsbeispiel eine weitgehend aus Metall gebaute Hakenanordnung, die in die Rückseite einer Fahrradtasche integriert ist und praktisch bündig mit der textilen Außenhaut dieser Rückseite abschließt. Eine annähernd Y-förmige Gabel 1 nimmt das freie Ende 2 eines Hakens 3 zwischen ihren Gabelzinken 4 auf. Die Gabel 1 ist um eine Gabelachse 5 schwenkbar gelagert, und der Haken 3 ist mit seinem geführten Ende 6, das dem freien Ende 2 gegenüberliegt, um eine Hakenachse 7 ebenfalls schwenkbar gelagert. Dort, wo der Haken 3 zwischen den Gabelzinken 4 verläuft, sind die Gabel 1 und der Haken 3 durch ein Gelenk 8 miteinander verbunden. Bei diesem ersten Ausführungsbeispiel verläuft zu diesem Zweck ein metallischer Gelenkbolzen durch die beiden Gabelzinken 4 und den dazwischen befindlichen Haken 3. Aus dieser Ansicht ist erkennbar, dass das Gelenk 8 höher liegt als die Hakenachse 7.

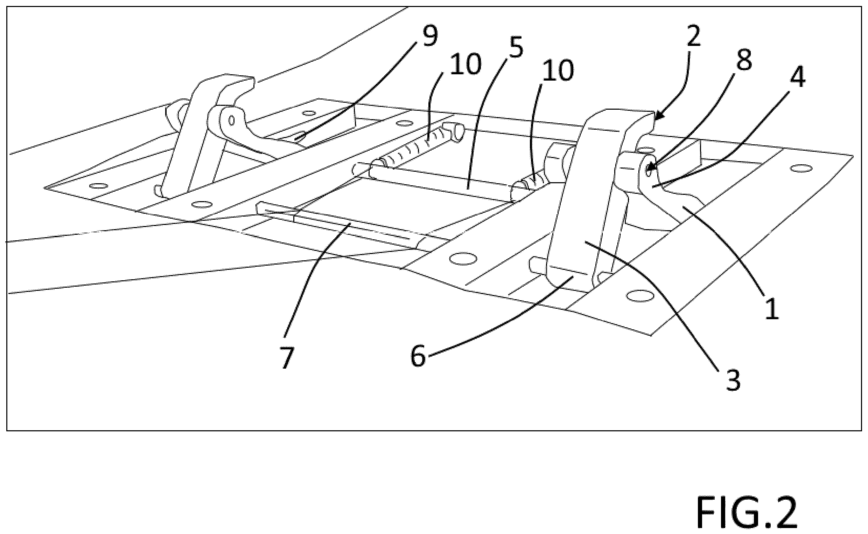

Fig. 2 zeigt die Hakenanordnung von Fig. 1 in ausgeklapptem Zustand, so dass sich die Haken 3 in ihrer Arbeitsstellung befinden: Die Hakenachse 7 ist ortsfest fixiert. Die Gabelachse 5 ist in Langlöchern 9 ortsbeweglich geführt und sie wird durch Rückholfedern 10 in die Ruhestellung gedrängt, aus der sie in die dargestellte, ausgeklappte Stellung gegen die Wirkung der Rückholfedern 10 bewegt werden kann. Weil das Gelenk 8 höher liegt als die Hakenachse 7, wird bei dieser Ausklapp-Bewegung das freie Ende 2 des Hakens 3 um die Hakenachse 7 nach außen geschwenkt, also in einen größeren Abstand von der Rückseite der Tasche.

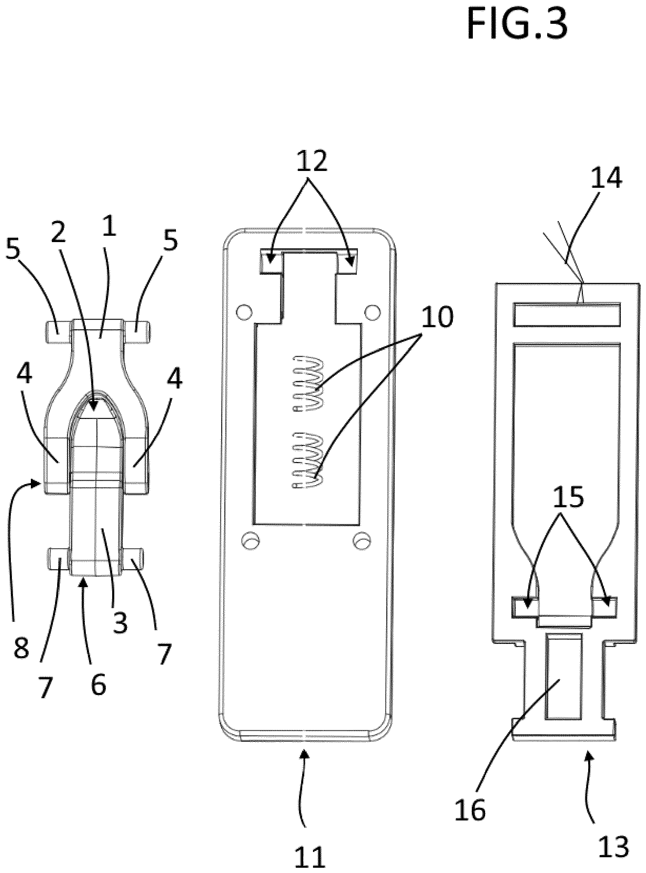

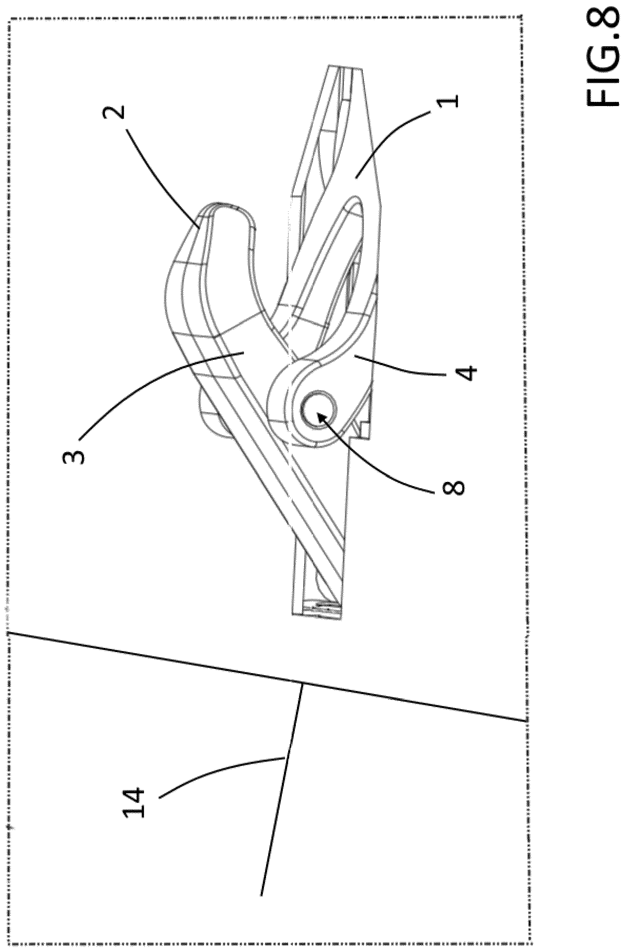

Die Fig. 3 bis 10 zeigen ein zweites Ausführungsbeispiel eines Hakens 3 und einer aus zwei Haken 3 bestehenden Haken-anordnung. **In** der Seitenansicht von Fig. 8 wird deutlich, dass sowohl der Haken 3 zu seinem freien Ende 2 hin gebogen verläuft als auch die Gabelzinken 4 zum Gelenk 8 hin gebogen verlaufen, so dass diese beiden Rundungen eine Aufnahmekontur schaffen, die annähernd an den runden Querschnitt einer Gepäckträgerstrebe angepasst ist, an welche die Tasche angehängt werden soll.

In Fig. 3 sind die Bauteile des zweiten Ausführungsbeispiels einzeln dargestellt, lediglich die Gabel 1 und der Haken 3 sind durch den erwähnten Gelenkbolzen des Gelenks 8 miteinander verbunden. Die Gabelachse 5 und die Hakenachse 7 sind jeweils durch Achsstummel verwirklicht, die nicht als separate Bauteile ausgestaltet sind, sondern von dem jeweiligen Bauteil, nämlich der Gabel 1 und dem Haken 3, einteilig mit ausgebildet sind. Ein Gehäuse 11 bildet zwei Lager 12 für die beiden Achsstummel der Hakenachse 7. Ein Schlitten 13 kann in das Gehäuse eingesetzt werden. Der Schlitten 13 ist länglich und in seiner Längsrichtung beweglich, an ihn schließt ein Zugseil 14 an, so dass durch Zug an dem Zugseil 14 der Schlitten 13 bewegt werden kann.

Der Schlitten 13 bildet zwei Lager 15 für die beiden Achsstummel der Gabelachse 5 sowie einen Federraum 16 für die beiden Rückholfedern 10. Das Zugseil 14 kann als Griffband ausgestaltet sein, an welchem die Fahrradtasche gehalten werden kann, wenn die Fahrradtasche an einen Gepäckträger angehängt wird, so dass bei dieser Bewegung die Haken 3 ausgeklappt sind. Ein solches Griffband kann zusätzlich zu einem Tragegriff der Fahrradtasche vorhanden sein, so dass die Fahrradtasche am Tragegriff getragen werden kann, während die Haken 3 in ihrer Ruhestellung verbleiben. Sollten die Haken 3 so weit gebogen sein, dass sie die Strebe des Gepäckträgers um mehr als 180° umgreifen und die Fahrradtasche am Gepäckträger gegen abhebende Kräfte sichern, so würden die Haken 3 geöffnet, wenn die Fahrradtasche an dem erwähnten Griffband erfasst und angehoben wird, so dass die Fahrradtasche während der Fahrt einerseits gut gesichert am Gepäckträger gehalten ist, andererseits aber problemlos von dem Gepäckträger abgenommen werden kann.

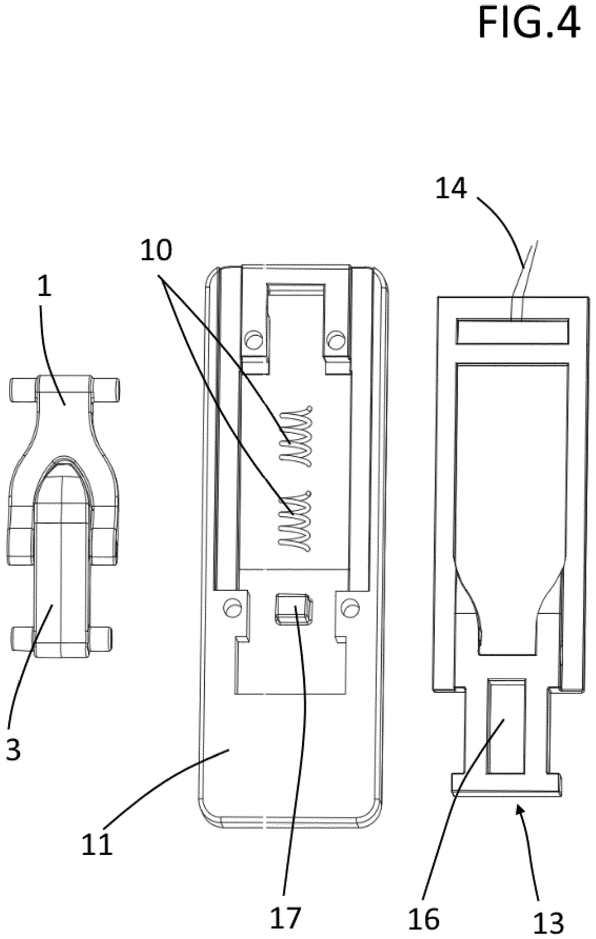

In Fig. 4 sind die Bauteile in einer um 180° gedrehten Anordnung zu sehen im Vergleich zu Fig. 3. Aus Blickrichtung der Fig. 4 ist im Gehäuse 11 ein Anschlag 17 erkennbar, der so schmal ist, dass er in dem Federraum 16 des Schlittens 13 aufgenommen werden kann.

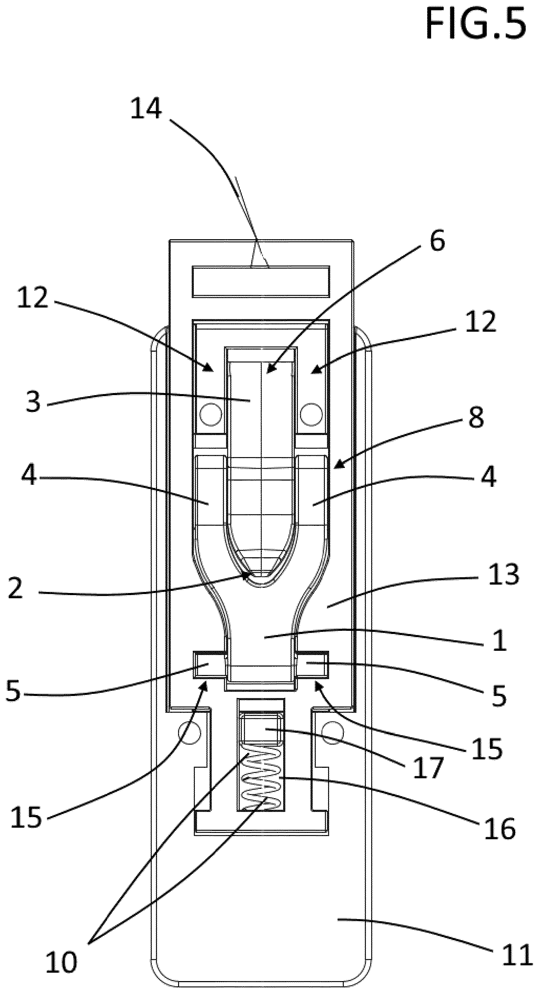

Fig. 5 zeigt die Bauteile des zweiten Ausführungsbeispiels zu der kompletten Baugruppe montiert, die einen Haken 3 bildet. Diese Ansicht zeigt die Seite der Baugruppe, die zum Innenraum der Fahrradtasche gerichtet ist, wenn die Haken-Baugruppe in der Rückseite einer Fahrradtasche montiert ist. Die Rückholfedern 10 befinden sich im Federraum 16, stützen sich am Anschlag 17 ab und drängen den Schlitten 13 nach unten. Gegen die Wirkung der Rückholfedern 10 kann der Schlitten 13 mithilfe des Zugseils 14 zum oberen Bildrand gezogen werden - was in Fig. 5 nicht dargestellt ist. Dadurch würde dann die Gabelachse 5 ähnlich wie in den Langlöchern 9 der Fig. 1 und 2 wandern, und am Gelenk 8 greift die Gabel 1 an den Haken 3 an, so dass der Haken 3 aus seiner Ruhestellung in die ausgeklappte Stellung geschwenkt würde.

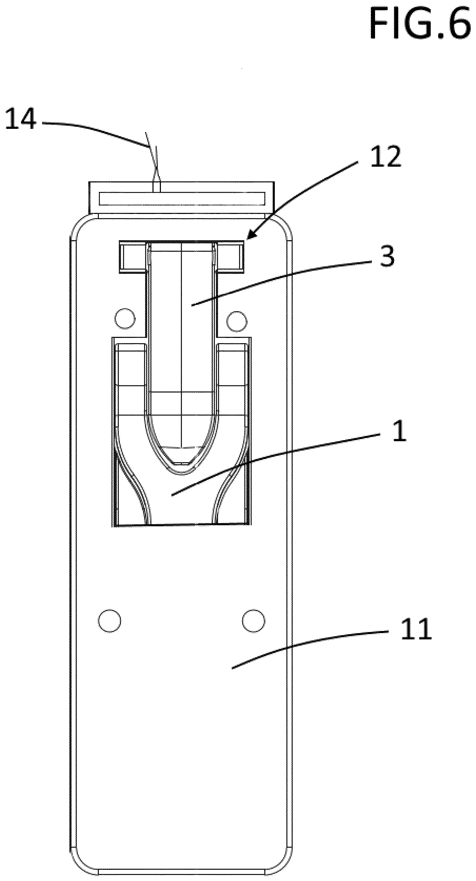

Fig. 6 zeigt die Haken-Baugruppe in einer um 180° gedrehten Anordnung im Vergleich zu Fig. 5. Fig. 6 zeigt die Außenseite der Haken-Baugruppe, die vom Innenraum der Fahrradtasche abgewandt wäre.

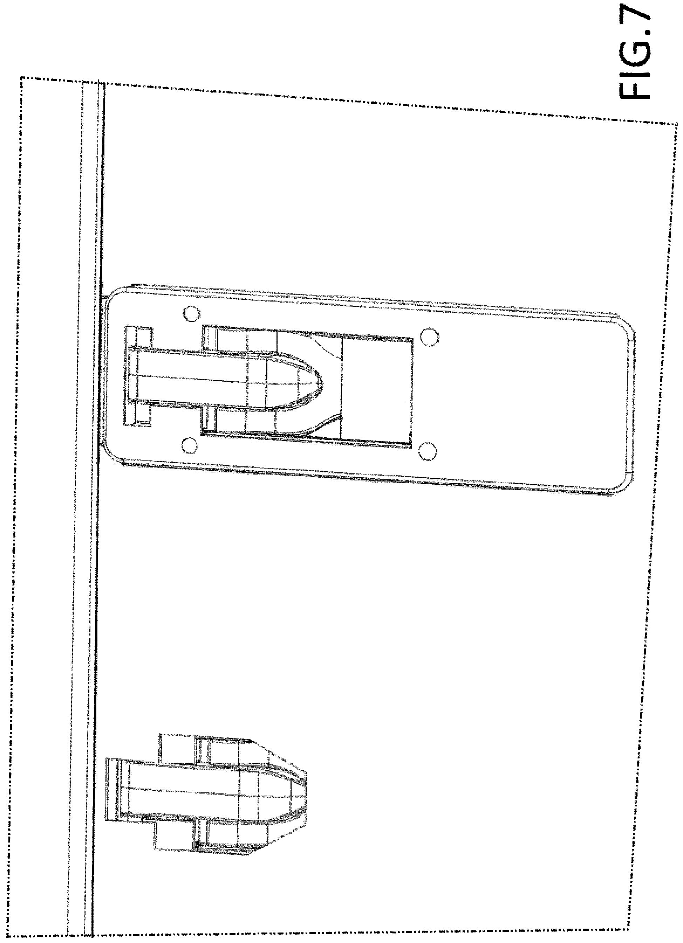

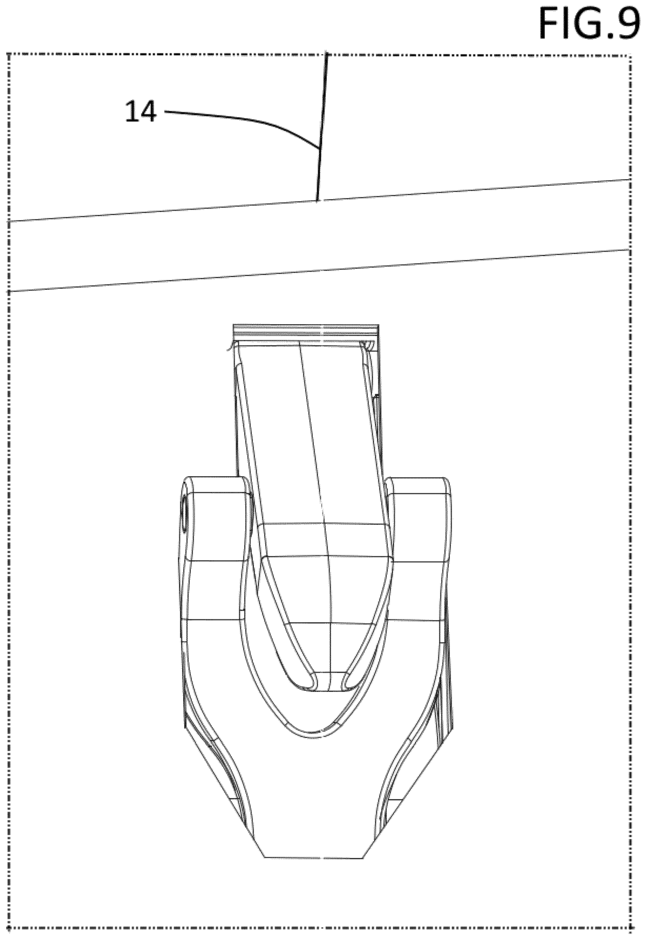

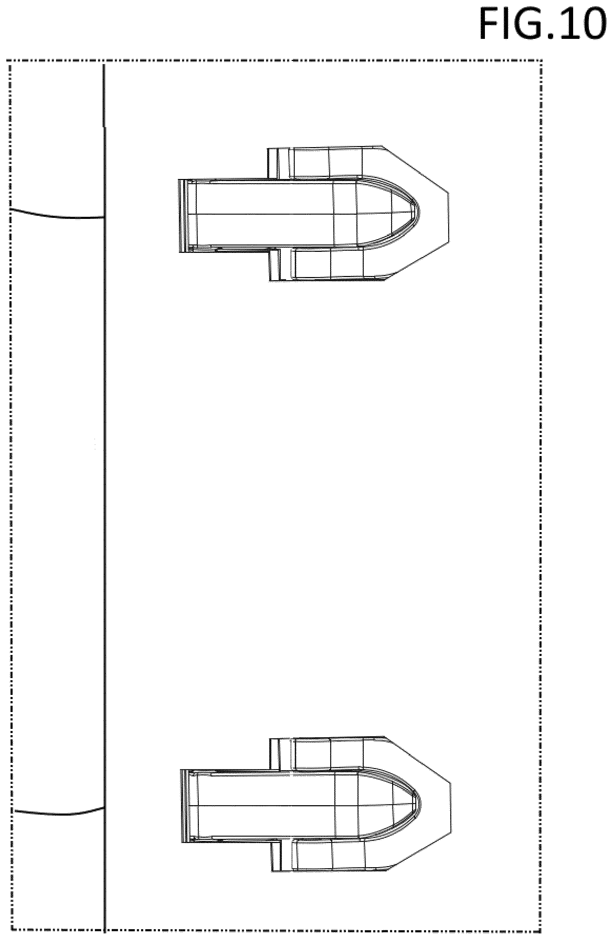

Die Fig. 7 bis 10 veranschaulichen, wie die Haken-Baugruppe in eine Fahrradtasche integriert sein kann. Beispielsweise zeigt Fig. 7 einerseits rechts eine komplett freigelegte Haken-Baugruppe, während die links dargestellte Haken-Baugruppe weitgehend vom Hüllstoff der Fahrradtasche abgedeckt ist. Fig. 10 zeigt in einer ähnlichen Ansicht anhand der dort rechts dargestellten Haken-Baugruppe, wie unauffällig klein die Ausschnitte in dem Hüllstoff der Fahrradtasche sein können, um die Funktion der beweglichen Elemente zu ermöglichen, die aus der Fahrradtasche heraus nach außen bewegt werden können. Die Fig. 8 und 9 veranschaulichen den teilweise verdeckten Verlauf des Zugseils 14.

Die Fig. 1 und 2 zeigen, dass das Gelenk 8 des ersten Ausführungsbeispiels im Vergleich zu der Hakenachse 7 nach außen versetzt ist. Dabei ragten das Gelenk 8 und die beiden äußeren Enden der Gabelzinken 4 geringfügig über die Rückseite der Fahrradtasche hinaus nach außen. Bei entsprechender Positionierung der Hakenachse 7, nämlich weiter zum Innenraum der Fahrradtasche hin, kann die Haken-Baugruppe so ausgestaltet werden, dass nach wie vor das Gelenk 8 im Vergleich zu der Hakenachse 7 nach außen versetzt ist, jedoch die gesamte Haken-Baugruppe bündig mit der Rückseite der Fahrradtasche abschließt und keiner ihrer Bestandteile über die Rückseite hinaus nach außen ragt.

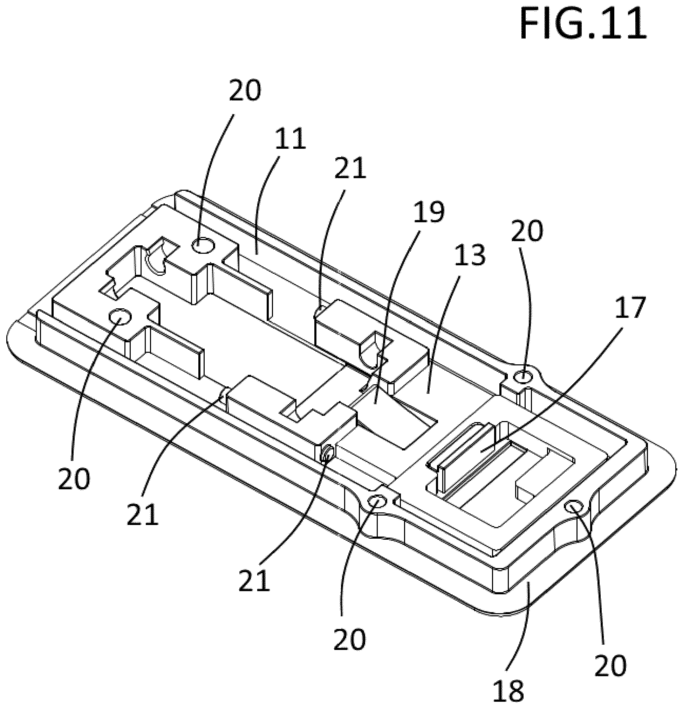

Die Fig. 11 bis 22 zeigen ein drittes Ausführungsbeispiel einer Hakenanordnung in einer Darstellung als separate Baugruppe, ohne eine die Hakenanordnung aufnehmende Fahrradtasche. Das dritte Ausführungsbeispiel stellt eine Weiterentwicklung des zweiten Ausführungsbeispiels dar, so dass nachfolgend auf die grundsätzliche Funktionsweise nicht näher eingegangen wird, sondern in erster Linie auf die Unterschiede des dritten zu dem zweiten Ausführungsbeispiel.

In Fig. 11 sind ein Gehäuse 11 und ein darin angeordneter Schlitten 13 dargestellt, wobei außen um das Gehäuse 11 ein Kragen 18 verläuft, der annähernd bündig der Rückseite einer Fahrradtasche anliegt, wenn die Hakenanordnung von außen in einen Ausschnitt der Rückseite der Fahrradtasche eingesetzt worden ist. Die in Fig. 11 gewählte Blickrichtung zeigt also die nach innen, zum Innenraum der Fahrradtasche weisende Seite der Hakenanordnung.

Der Schlitten 13 besteht aus Kunststoff und weist eine elastische Federzunge 19 auf. Aufnahmebohrungen 20 des Gehäuses 11 dienen dazu, einen Verschlussdeckel der Hakenanordnung am Gehäuse festzulegen, so dass die Hakenanordnung zum Innenraum der Fahrradtasche hin abgedeckt ist. Beispielsweise können selbstschneidende Schrauben in das Material des Gehäuses eingedreht werden, wenn diese Schrauben zur Befestigung des Verschlussdeckels in die Aufnahmebohrungen 20 eingeschraubt werden. Führungszapfen 21 am Schlitten 13 dienen dazu, Federn wie die Rückholfedern 10 zu führen. Die Ausnehmung im Schlitten 13, die den Anschlag 17 aufnimmt, verläuft bei dem dritten Ausführungsbeispiel an ihrem von dem Anschlag 17 abgewandten Ende mit einer Stufe, die später noch näher erläutert wird.

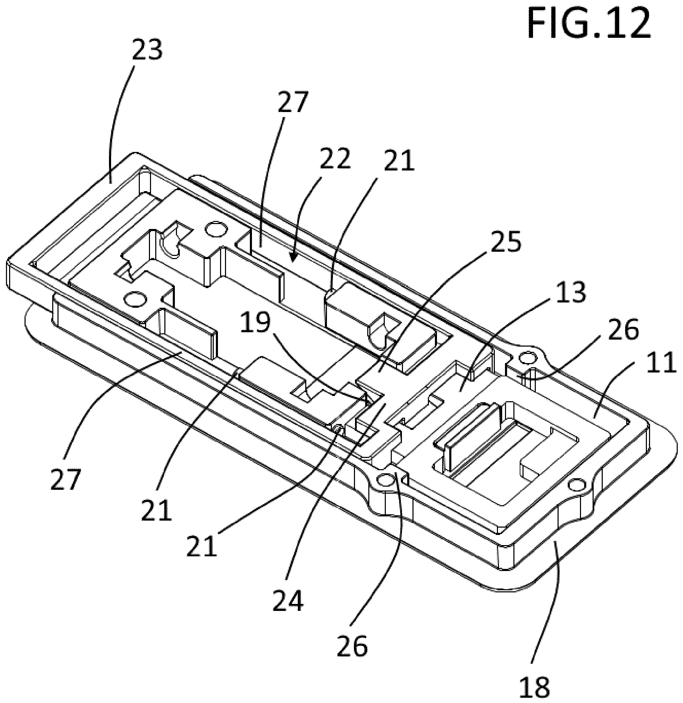

Fig. 12 zeigt die in Fig. 11 dargestellten Elemente sowie zusätzlich ein Zugelement 22, das im Unterschied zu dem Zugseil 14 des zweiten Ausführungsbeispiels als rahmenartiges, festes Bauteil ausgestaltet ist. Das Ende des Zugelements 22, das in der Gebrauchsstellung der Hakenanordnung, wenn die Fahrradtasche an eine Strebe eines Fahrrads, insbesondere an einen Gepäckträger, angehängt ist, das oberes Ende 23 des Zugelements 22 bildet, kann entweder unmittelbar als Handhabe benutzt werden. Insbesondere an einer Fahrradtasche zwei Hakenanordnungen nebeneinander vorgesehen sind, können die beiden oberen Enden 23 der beiden Hakenanordnungen durch ein Griffelement miteinander verbunden sein, beispielsweise durch ein Halteschlaufe, einen Griffbügel oder dergleichen, um eine Synchronbetätigung beider Hakenanordnungen zu ermöglichen.

Das Zugelement 22 weist an seinem unteren Ende 24 einen Riegelbetätiger 25 auf der als Lasche mit einer Schrägfläche ausgestaltet ist, die in den offenen Innenraum des rahmenartigen Zugelements 22 ragt. Der Riegelbetätiger 25 wirkt mit seiner Schrägfläche auf die elastische Federzunge 19 des Schlitten 13 ein, wenn das Zugelement 22 an seinem oberen Ende 23 relativ zum Schlitten 13 nach oben gezogen wird, was später noch näher erläutert wird.

Eine Bewegung des Zugelements 22 nach unten wird durch den Schlitten 13 begrenzt. Dadurch, dass das untere Ende 24 des Zugelements 22 in seinem mittleren Bereich in den Schlitten 13 eintaucht, wird der Schlitten 13 bei einer Abwärtsbewegung des Zugelements 22 nach unten mitgenommen und bildet die Begrenzung, die eine weitere Abwärtsbewegung des Zugelements 22 verhindert, wenn der Schlitten 13 seine untere Endstellung erreicht hat. Zwei aufwärts weisende Führungszapfen 21 am Schlitten 13 dienen zur Führung von in Fig. 12 nicht dargestellten Rückholfedern 10, die sich am Gehäuse 11 abstützen, und ein nach unten ragender Führungszapfen 21 des Schlittens 13 dient zur Führung einer Feder, die sich am Zugelement 22 abstützt und das Zugelement 22 gegenüber dem Schlitten 13 nach unten drängt. Zwischen dem oberen Ende 23 und dem unteren Ende 24 weist das Zugelement 22 Längsstreben 27 auf, die unter anderem auch dazu beitragen, den Schlitten 13 innerhalb des Gehäuses 11 seitlich zu führen, während das Zugelement 22 seinerseits innerhalb des Gehäuses 11 und durch das Gehäuse 11 selbst geführt ist.

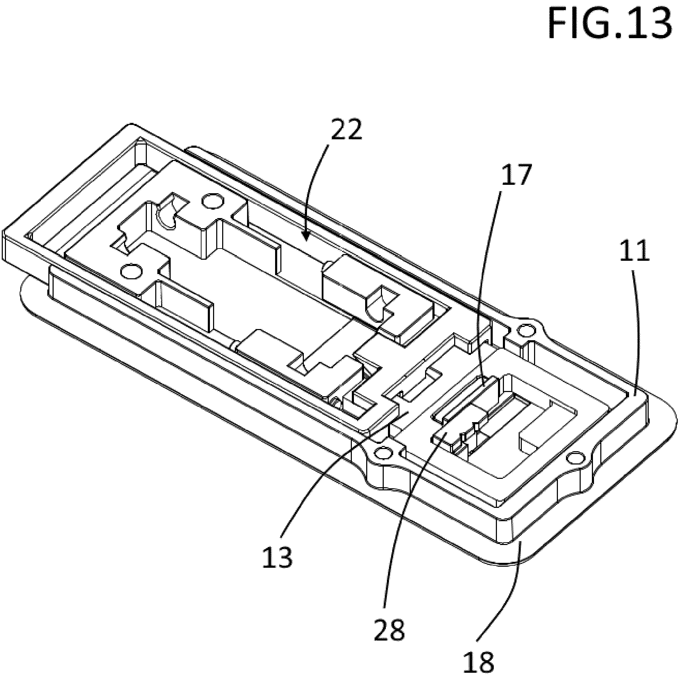

Fig. 13 zeigt die Anordnung von Fig. 12 sowie einen Wahlriegel 28, der zur Anpassung der Hakenanordnung an unterschiedliche Durchmesser der Streben dient, an welche Streben die Fahrradtasche angehängt werden soll. Diese Funktion wird später noch näher erläutert. Der Wahlriegel 28 ist - insofern ähnlich wie die Unterkante des Schlittens 13 - abgestuft ausgestaltet und weist seinerseits zwei Stufen und somit drei Flächen auf, die sich unterschiedlich weit von der Unterkante des Schlittens 13 entfernt befinden. Der Wahlriegel 28 ist parallel zur Unterkante des Schlittens 13 verschiebbar und nimmt in der in Fig. 13 dargestellten Position eine seiner beiden Endstellungen ein. **In** dieser Position kann der Schlitten 13 maximal weit nach oben, in Fig. 13 also schräg nach links, verschoben werden, da der Wahlriegel 28 eine solche Bewegung nicht behindert, sondern zulässt, bis das untere Ende des Schlittens 13 dem Anschlag 17 anliegt. Dabei taucht der Wahlriegel 28 in die durch die Stufe geschaffene Ausnehmung am unteren Ende des Schlittens 13 ein.

Ausgehend von dieser in Fig. 13 dargestellten Endstellung kann der Wahlriegel 28 in drei Schritten weiter nach rechts geschoben werden, so dass er zwischen das untere Ende des Schlittens 13 und den Anschlag 17 gerät. Die abgestufte Ausgestaltung des Wahlriegels 28 ermöglicht somit insgesamt vier Begrenzungen für eine Aufwärtsbewegung des Schlittens 13 und wirkt genauso, als wenn der Anschlag 17 zusätzlich zu der in Fig. 13 dargestellten Position in drei zusätzlichen Schritten näher an das untere Ende des Schlittens 13 verlagert werden könnte. Der Verschiebweg des Schlittens 13 kann also, ausgehend von der maximal möglichen Verschiebelänge gemäß Fig. 13, in drei Schritten verringert werden und insgesamt vier unterschiedliche Weglängen aufweisen, so dass auch der Verschiebeweg des im Schlitten 13 gelagerten Hakenteils dementsprechend 4-fach einstellbar ist. Daraus ergeben sich vier unterschiedliche Öffnungsweiten des Klapphakens, so dass die nach unten offene, im Wesentlichen U-förmige Aufnahmekontur, die durch die beiden Hakenteile in deren Gebrauchsstellung geschaffen wird, an den Durchmesser einer Strebe angepasst werden kann, an welche die Fahrradtasche angehängt werden soll.

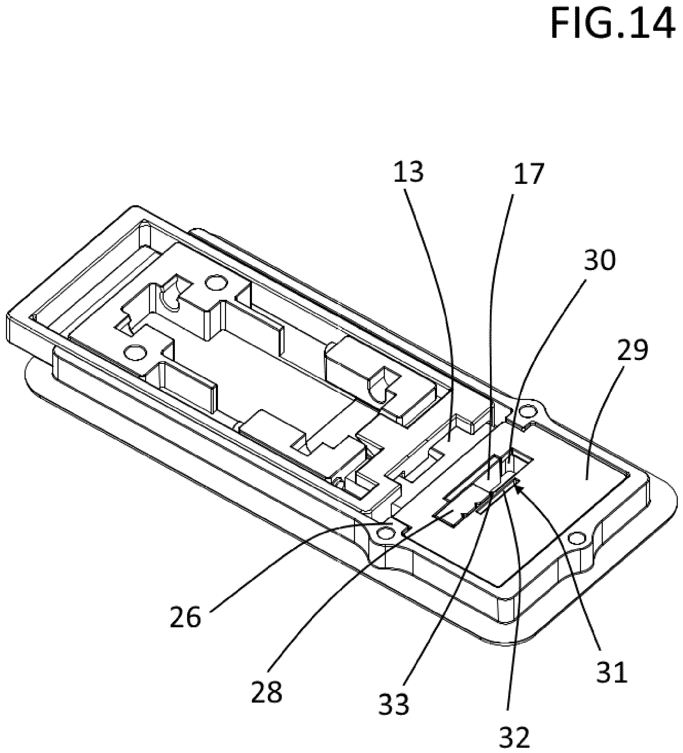

Fig. 14 zeigt die Anordnung von Fig. 13 mit einer zusätzlich montierten Abdeckplatte 29. Die Abdeckplatte 29 weist eine Ausnehmung 30 auf, die einerseits als Führung für den Wahlriegel 28 dient, andererseits auch den Anschlag 17 umfasst und gegen die Kräfte abstützt, die auf den Anschlag 17 einwirken, wenn der Schlitten 13 nach oben und gegen den Anschlag 17 gezogen wird. Die Abdeckplatte 29 stützt sich dazu an den beiden nach innen ragenden Vorsprüngen 26 des Gehäuses 11 ab.

Nahe der Ausnehmung 30 verläuft ein Schlitz 31 durch die Abdeckplatte 29, so dass zwischen der Ausnehmung 30 und dem Schlitz 31 ein federnder Steg 32 geschaffen ist, an den eine Rastnase 33 angeformt ist. Die Rastnase 33 hält den Wahlriegel 28 in seinen beiden Endstellungen, um zusätzlich fixiert sie den Wahlriegel 28 in zwei möglichen Zwischenstellungen, indem sie in dazu vorgesehene Kerben des Wahlriegels 28 eingreift, wenn der Wahlriegel 21 entsprechend im Vergleich zu seiner Fig. 14 dargestellten Position verschoben ist.

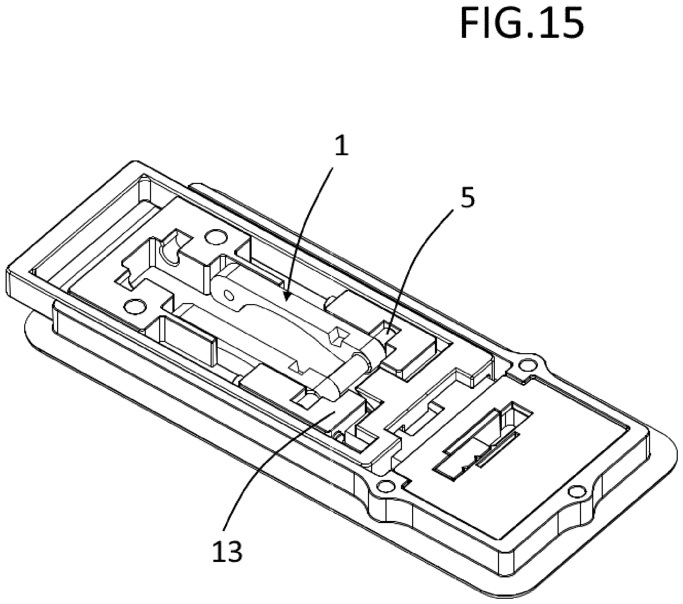

Fig. 15 zeigt die in den Schlitten 13 eingesetzte Gabel 1 der Hakenanordnung. Die Gabelachse 5 weist an ihren beiden Enden Achsstummel auf, die in dem Schlitten 13 gelagert sind, ist aber auch dazwischen als runde Achse ausgestaltet. Die Bohrungen in der Gabel 1 sind erkennbar, um das Gelenk 8 mit dem Haken 3 zu bilden.

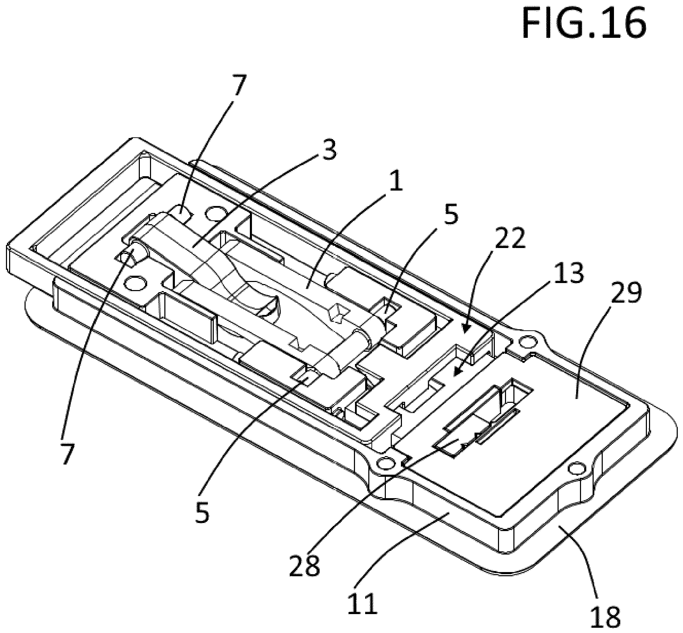

Fig. 16 zeigt den Haken 3 in seiner montierten Stellung, die Hakenachse 7 ist in Form von Achsstummeln ausgestaltet, die in dem Gehäuse 11 gelagert sind. Das Gelenk 8 ist dadurch geschaffen worden, dass ein Gelenkbolzen in entsprechende, miteinander fluchtende Bohrungen des Hakens 3 und der Gabel 1 eingesetzt worden ist und diese beiden Elemente miteinander verbindet.

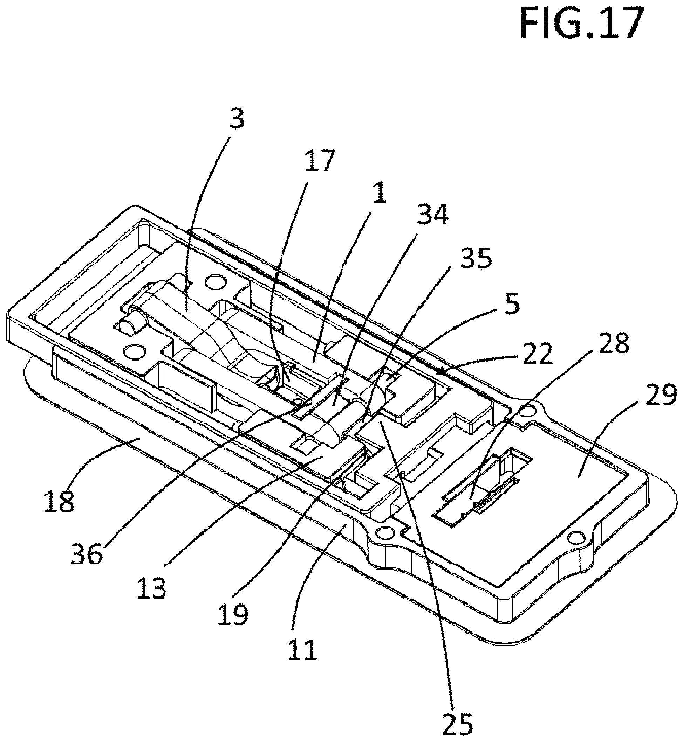

Fig. 17 zeigt die Hakenanordnung der Fig. 16 und zusätzlich einen Riegel 34, der auf den mittleren Bereich der Gabelachse 5 aufgeclipst ist und auf diese Weise schwenkbeweglich relativ zur Gabel 1 gelagert ist. Ein Betätigungsabschnitt 35 des Riegels 34 erstreckt sich zum Riegelbetätiger 25 des Zugelements 22. Wenn das Zugelement 22 nach oben gezogen wird, in Fig. 17 also schräg nach links oben, wirkt der Riegelbetätiger 25 des Zugelements 22 auf den Betätigungsabschnitt 35 des Riegels 34 ein und bewegt den Riegel 34 in das Gehäuse 11 heraus in seine Freigabestellung. Eine Traverse 36 am Riegel 34 schlägt gegen die Gabel 1 an und verhindert, dass der Riegel 34 zu weit ausgeschenkt werden kann. Zugunsten einer möglichst flachen Bauweise weist die Gabel 1 hierzu Einbuchtungen auf, in denen die Traverse 36 aufgenommen wird, so dass die Traverse 36 in die Gabel 1 eintauchen kann.

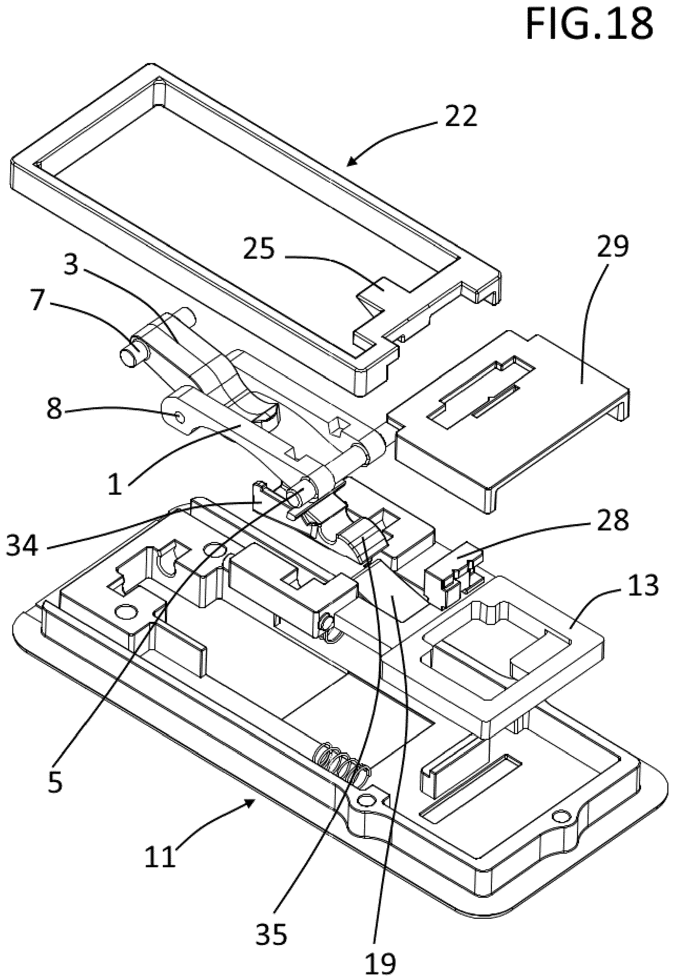

Fig. 18 zeigt die Hakenanordnung der Fig. 17 in einer auseinandergezogenen Darstellung, in welcher die schräge Rampe des Riegelbetätigers 25 am Zugelement 22 ebenso erkennbar ist wie der gebogene Verlauf des Betätigungsabschnitts 35 des Riegels 34. Der Haken 3 und die Gabel 1 sind hier jedoch in der Art montiert dargestellt, dass sie im Bereich des Gelenks 8 miteinander verbunden sind.

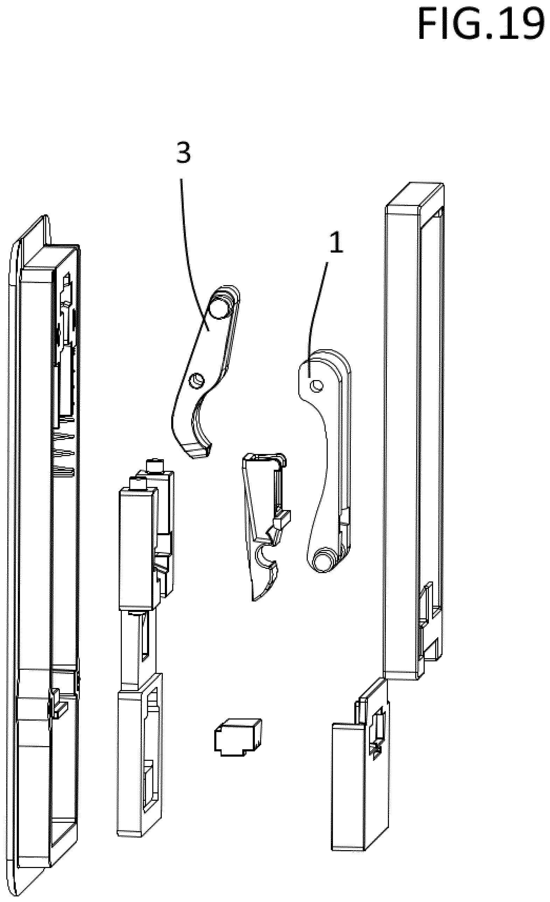

Fig. 19 zeigt die Hakenanordnung des dritten Ausführungsbeispiels ebenfalls in einer auseinandergezogenen Darstellung, jedoch einer anderen Blickrichtung und wobei hier auch der Haken 3 und die Gabel 1 auseinandergezogen dargestellt sind.

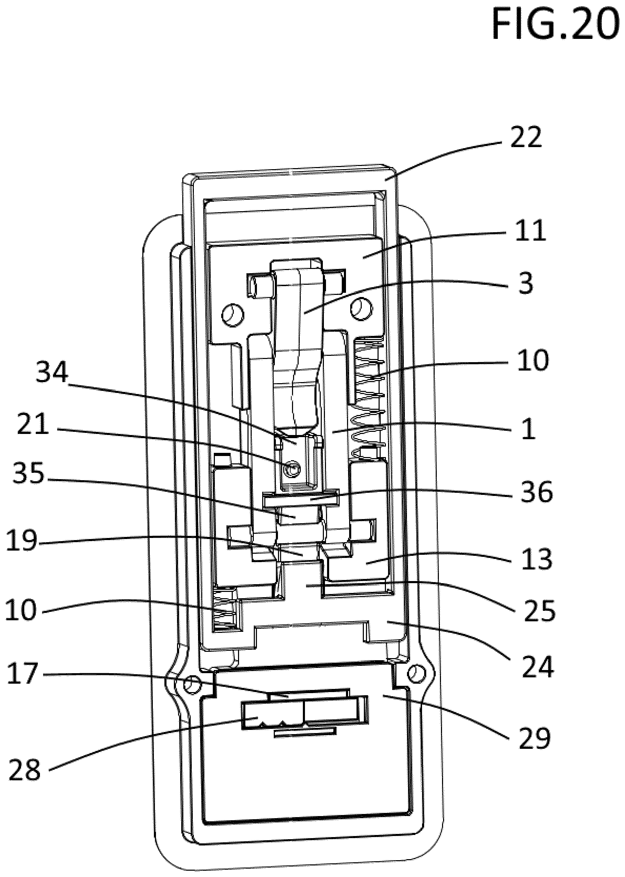

Fig. 20 zeigt die montierte Baugruppe der Hakenanordnung des dritten Ausführungsbeispiels einschließlich der Rückholfedern 10. Dabei sind einerseits, wie beim zweiten Ausführungsbeispiels, zwei Rückholfedern 10 zwischen dem Gehäuse 11 und dem Schlitten 13 angeordnet, die den Schlitten 13 - und damit insbesondere auch den Haken 3 und die Gabel 1 - in eine Ruhestellung drängen, und zweitens ist bei diesem Ausführungsbeispiel auch eine einzige Rückholfeder 10 zwischen dem Zugelement 22 und dem Schlitten 13 angeordnet, welche das Zugelement 22 relativ zum Schlitten 13 weiter nach unten und damit in seine Ruhestellung drängt. Auf diese Weise wirkt das Zugelement 22 nicht mit seinem Riegelbetätiger 25 auf die Federzunge 19 des Schlittens 13 und somit auf den Betätigungsabschnitt 35 des Riegels 34 ein, wenn sich das Zugelement 22 in seiner Ruhestellung befindet, beispielsweise nachdem die Fahrradtasche an einen Gepäckträger eines Fahrrads angehängt worden ist. Der Riegel 34 kann daher seine nach außen ragende Sicherungsstellung einnehmen.

Der Riegel 34 kann durch die Federzunge 19 des Schlittens 13, oder - abweichend von dem dargestellten Ausführungsbeispiel - durch eine Wendelfeder belastet werden, die mittels eines Führungszapfens 21 des Riegels 34 geführt sein kann, wobei der Riegel 34 zur Aufnahme einer solchen Wendefeder vorbereitet ist und der dazu vorgesehene Führungszapfen 21 in Fig. 20 ersichtlich ist.

Wird das Zugelement 22 angehoben und nach oben gezogen, so wirkt es mit dem Riegelbetätiger 25 auf die Federzunge 19 des Schlittens 13 und somit auf den Betätigungsabschnitt 35 des Riegels 34 ein, so dass der Riegel 34 in das Gehäuse 11 geschwenkt wird. Die nach unten offene Aufnahmekontur des im Wesentlichen U-förmigen Klapphakens wird somit nicht mehr durch den Riegel 34 nach unten begrenzt. Dies ermöglicht es erstens, die Fahrradtasche problemlos auf eine Strebe eines Fahrrads zu hängen und die Strebe in der Aufnahmekontur der beiden Hakenelemente aufzunehmen. Zweitens wird dadurch der Riegel 34 auch dann aus seiner Gebrauchs- oder Sicherungsstellung in seine Ruhestellung bewegt, wenn die am Gepäckträger hängende Fahrradtasche am Zugelement 22 erfasst und angehoben wird, um sie von dem Gepäckträger abzunehmen. Durch diese Hubbewegung wird zunächst das Zugelement 22 relativ zu dem Schlitten 13 angehoben, der zunächst ortsfest verbleibt. Durch die Kennlinie der einzelnen Rückholfeder 10, die sich zwischen dem Zugelement 22 und dem Schlitten 13 befindet, ist sichergestellt das die Federkraft dieser einzelnen Rückholfeder 10 geringer ist als die kombinierten Federkräfte der beiden Rückholfedern 10, die zwischen dem Schlitten 13 und dem Gehäuse 11 angeordnet sind. Erst wenn das Zugelement 22 mit seinem unteren Ende 24 gegen den Schlitten 13 gerät, wird die weitere Hubbewegung auf den Schlitten 13 und anschließend auf das Gehäuse 11 übertragen, so dass letztlich die gesamte Fahrradtasche angehoben wird.

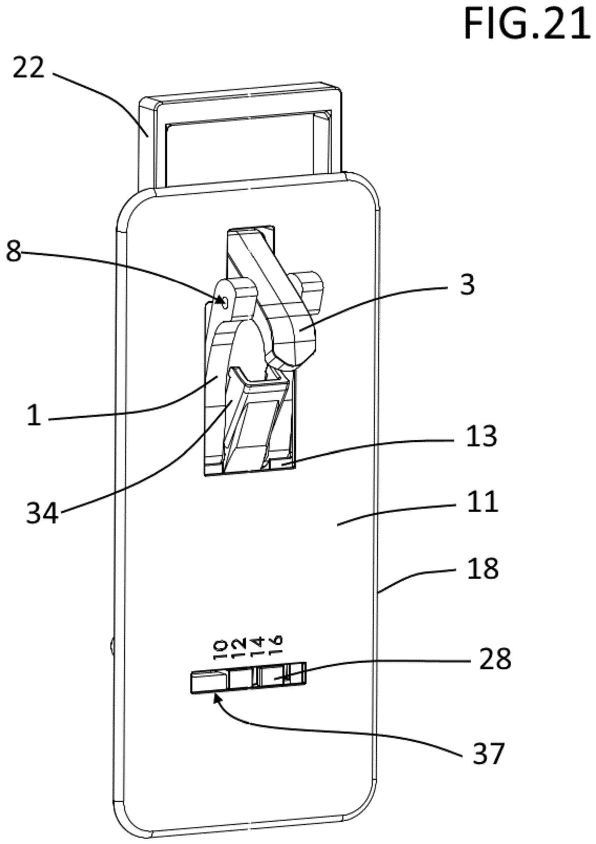

Fig. 21 zeigt die Hakenanordnung des dritten Ausführungsbeispiels in ihrer Gebrauchsstellung, bei welcher der Haken 3 und die Gabel 1 über das Gehäuse 11 hinaus nach außen ragen. Die Blickrichtung in Fig. 21 ist von der Außenseite auf die Hakenanordnung gewählt, also auf die Seite des Gehäuses 11, die auch den umlaufenden, flachen Kragen 18 bildet. Der gebogene Verlauf der Gabel 1 und der gebogene verlaufende Abschnitt des Hakens 3 bilden zusammen eine im Querschnitt runde Aufnahmekontur, um die Strebe eines Fahrrads umgreifen zu können, so dass die Hakenanordnung - und damit die gesamte Fahrradtasche - an eine solche Strebe angehängt werden kann, beispielsweise und typischerweise an die Strebe eines Fahrrad-Gepäckträgers. **In** der Praxis sind solche Streben als Stangen aus Vollmaterial oder auch als Rohre bekannt, wobei die Streben je nach Bauart, aber auch aufgrund unterschiedlicher Herstellerspezifikationen unterschiedliche Durchmesser aufweisen.

Der Riegel 34 dient dazu, die Hakenanordnung bzw. Fahrradtasche gegen abhebende Kräfte zu sichern. Einerseits muss die Hakenanordnung eine so große Aufnahmekontur schaffen, dass auch Streben mit einem großem Durchmesser von z.B. 16 mm dahin aufgenommen werden können, und andererseits muss der Riegel 34 so weit nach außen ragen und die Aufnahmekontur nach unten begrenzen, dass die Hakenanordnung auch an Streben mit einem kleinem Durchmesser von z.B. 10 mm gegen abhebende Kräfte gesichert ist. Zu diesem Zweck kann die Beweglichkeit des Schlittens 13 mittels des Wahlriegels 28 bei dem dargestellten Ausführungsbeispiel in vier Schritten begrenzt werden, nämlich durch die beiden Endstellungen und die beiden erwähnten Zwischenstellungen des Wahlriegels 28. **In** Abhängigkeit davon, wie weit der Schlitten 13 mittels des Zugelements 22 nach oben gezogen werden kann, werden der Haken 3 und die Gabel 1 unterschiedlich weit aus dem Gehäuse 11 heraus bewegt, schaffen also unterschiedlich große Aufnahmekonturen, so dass diese an die unterschiedlichen Strebendurchmesser angepasst werden können. Gleichzeitig wird auch die Bewegung des Riegels 34 unterschiedlich weit nach außen ermöglicht, so dass dieser stets, angepasst an den jeweiligen Strebendurchmesser, die Sicherung der Hakenanordnung an der jeweiligen Strebe gewährleisten kann.

An der Außenseite des Gehäuses 11 ist bei dargestellten Ausführungsbeispiel eine Skala angeordnet, die beispielsweise von 1 bis 4 reichen kann oder wie bei dem dargestellten Ausführungsbeispiel bestimmte Maße angibt, die für die Durchmesser unterschiedlicher Streben stehen, an welche nämlich die Hakenanordnung angehängt werden kann, beispielsweise Maße von 10 bis 16 mm in 2-Millimeter-Schritten. Die Skala befindet sich neben einer Riegelöffnung 37 des Gehäuses 11, wobei der Riegel 34 innerhalb der Riegelöffnung 37 verschiebbar ist und insbesondere auch durch die Riegelöffnung 37 hindurch erfasst und auf diese Weise betätigt und verschoben werden kann. Der Riegel 34 weist bei dem dargestellten Ausführungsbeispiel eine Kerbe auf, die als Zeiger dient und in den vier unterschiedlichen Stellungen des Riegels 34 auf die vier unterschiedlichen Skalenwerte zeigt.

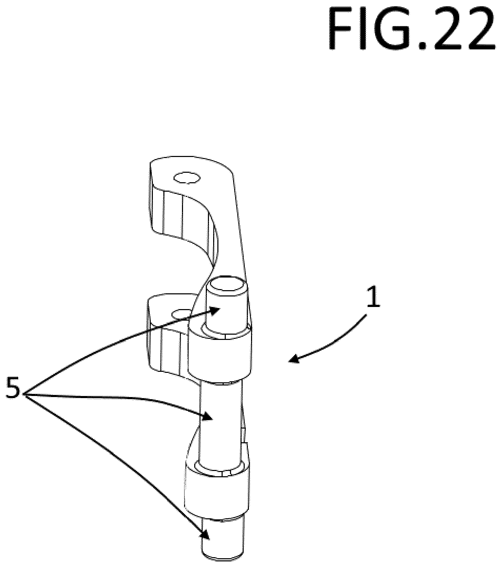

Fig. 22 zeigt die Gabel 1 des dritten Ausführungsbeispiels insbesondere im Hinblick auf die Ausgestaltung der Gabelachse 5. diese ist zwar im Bereich der beiden Achsstummel und auch in ihrem mittleren Bereich rund, jedoch nicht in Art eines geradlinig durchlaufenden Achskörpers. Vielmehr ist erkennbar, dass zwischen den beiden Achsstummeln, welche für die Schwenkbeweglichkeit der Gabel 1 relevant sind, der mittlere Bereich der Gabelachse 5 versetzt zu diesen beiden Achsstummeln verläuft. Da der Riegel 34 auf diesen mittleren Bereich der Gabelachse 5 aufgeclipst ist, bewirkt der Versatz dieses mittleren Bereichs, dass der Riegel 34 weiter nach außen ragen kann und somit besser zu der Strebe des Fahrrads, beispielsweise zu einer Strebe des Gepäckträgers, positioniert werden kann, um seine Sicherungsfunktion besser erfüllen zu können.

### Bezugszeichen:

- 1: Gabel
- 2: freies Ende
- 3: Haken
- 4: Gabelzinken
- 5: Gabelachse
- 6: Geführtes Ende
- 7: Hakenachse
- 8: Gelenk
- 9: Langloch
- 10: Rückholfeder
- 11: Gehäuse
- 12: Lager für Hakenachse
- 13: Schlitten
- 14: Zugseil
- 15: Lager für Gabelachse
- 16: Federraum
- 17: Anschlag
- 18: Kragen
- 19: Federzunge
- 20: Aufnahmebohrung
- 21: Führungszapfen
- 22: Zugelement
- 23: Oberes Ende (des Zugelements 22)
- 24: Unteres Ende (des Zugelements 22)
- 25: Riegelbetätiger
- 26: Vorsprung
- 27: Längsstrebe
- 28: Wahlriegel
- 29: Abdeckplatte
- 30: Ausnehmung
- 31: Schlitz
- 32: Steg
- 33: Rastnase
- 34: Riegel
- 35: Betätigungsabschnitt
- 36: Traverse
- 37: Riegelöffnung

## Patentansprüche

1. Fahrradtasche,
- mit Wänden, die einen Innenraum der Fahrradtasche begrenzen,
- wobei eine Rückwand dazu bestimmt ist, in einer Gebrauchsstellung, in welcher die Fahrradtasche an einen Gepäckträger eines Fahrrads angehängt ist, dem Fahrrad zugewandt ausgerichtet zu sein,
- und mit einem Klapphaken, der dazu bestimmt ist, in der Gebrauchsstellung der Fahrradtasche, in welcher diese an einen Gepäckträger eines Fahrrads angehängt ist, einen Abschnitt des Gepäckträgers zu umgreifen und die Fahrradtasche an dem Gepäckträger zu halten,
- wobei der Klapphaken beweglich ist
- zwischen einer Haltestellung, in welcher er von der Rückwand nach außen ragt
- und einer Ruhestellung, in welcher er weiter in die von den Wänden umschlossene Kontur der Fahrradtasche eintaucht als in der Haltestellung,
- und wobei der Klapphaken jeweils zwei relativ zueinander bewegliche Hakenteile aufweist,
**dadurch gekennzeichnet,**
**dass** ein erster Hakenteil beweglich gelagert ist und ein zweiter Hakenteil entlang einer Führung geführt verschiebbar ist,
und der erste Hakenteil an den zweiten Hakenteil in der Art anschließt, dass durch die Verschiebung des zweiten Hakenteils der erste Hakenteil zwischen der Ruhestellung und der Gebrauchsstellung bewegt wird.

2. Fahrradtasche nach Anspruch 1,
**dadurch gekennzeichnet,**
**dass** die beiden Hakenteile jeweils schwenkbar gelagert sind,
und mittels eines Gelenks (8) miteinander verbunden sind,
dessen Gelenkachse parallel zu den Schwenkachsen der beiden Hakenteile verläuft,
und wobei der zweite Hakenteil in der Art verschiebbar ist, dass dessen Verschiebung eine Abstandsänderung der beiden Schwenkachsen der beiden Hakenteile sowie jeweils eine Schwenkbewegung der beiden Hakenteile bewirkt.

3. Fahrradtasche nach Anspruch 2,
**dadurch gekennzeichnet,**
**dass** die Gelenkachse des Gelenks (8) in Bezug auf eine gedachte Verbindungslinie, die zwischen den beiden Schwenkachsen der beiden Hakenteile verläuft, nach außen versetzt ist.

4. Fahrradtasche nach Anspruch 2 oder 3,
**dadurch gekennzeichnet,**
**dass** ein Hakenteil als Gabel (1) mit zwei Gabelzinken (4) ausgestaltet und um eine Gabelachse (5) schwenkbar ist, und der andere Hakenteil als Haken (3) ausgestaltet ist, der um eine Hakenachse (7) schwenkbar ist,
wobei sich der Haken (3) zwischen die Gabelzinken (4) der Gabel (1) erstreckt,
und die Gelenkachse des Gelenks (8) durch die Gabelzinken (4) und den dazwischen befindlichen Haken (3) verläuft.

5. Fahrradtasche nach Anspruch 4,
**dadurch gekennzeichnet,**
**dass** der Haken (3) in dem Bereich, in welchem er von der Gelenkachse des Gelenks (8) und von der Hakenachse (7) abgewandt bis zu einem freien Ende (2) des Hakens (3) verläuft, nach innen verläuft, wenn sich der Klapphaken in seiner Ruhestellung befindet.

6. Fahrradtasche nach einem der Ansprüche 2 bis 5,
**dadurch gekennzeichnet,**
**dass** die Schwenkachse des verschiebbaren Hakenteils sich über dieses Hakenteil hinaus erstreckt und in einen Führungsschlitz eingreift, der die Führung bildet, entlang welcher dieser Hakenteil verschiebbar ist.

7. Fahrradtasche nach Anspruch 6,
**dadurch gekennzeichnet,**
**dass** beiderseits des verschiebbaren Hakenteils Führungsschlitze verlaufen und die Schwenkachse dieses Hakenteils in beide Führungsschlitze eingreift.

8. Fahrradtasche nach einem der Ansprüche 2 bis 7,
**dadurch gekennzeichnet,**
**dass** die Schwenkachse eines Hakenteils durch zwei an den Hakenteil angeformte Achsstummel gebildet ist.

9. Fahrradtasche nach einem der vorhergehenden Ansprüche,
**dadurch gekennzeichnet,**
**dass** eine Rückholfeder (10) auf einen Hakenteil in der Art einwirkt, dass der Klapphaken automatisch federbelastet in seine Ruhestellung gedrängt ist,
und **dass** ein Betätigungselement an einen Hakenteil in der Art anschließt, dass dieser Hakenteil mittels des Betätigungselements gegen die Wirkung der Rückholfeder (10) in seine Haltestellung beweglich ist.

10. Fahrradtasche nach Anspruch 9,
**dadurch gekennzeichnet,**
**dass** die Rückholfeder (10) auf den zweiten, entlang der Führung verschiebbaren Hakenteil einwirkend angeordnet ist.

11. Fahrradtasche nach Anspruch 9 oder 10,
**dadurch gekennzeichnet,**
**dass** das Betätigungselement als ein Zugseil (14) ausgestaltet ist.

12. Fahrradtasche nach einem der vorhergehenden Ansprüche,
**gekennzeichnet durch**
einen Riegel (34), der zwischen einer Gebrauchsstellung und einer Ruhestellung beweglich ist,
wobei die Hakenteile in ihrer Gebrauchsstellung eine nach unten offene Aufnahmekontur schaffen, die zur Aufnahme einer Strebe des Gepäckträgers bestimmt ist,
und wobei der Riegel (34) in seiner Gebrauchsstellung diese Aufnahmekontur nach unten in der Art begrenzt, dass er die Fahrradtasche an der Strebe des Gepäckträgers gegen abhebende Kräfte sichert,
und wobei der Riegel (34) aus seiner Gebrauchsstellung in eine Ruhestellung beweglich ist, in welcher er die nach unten offene Aufnahmekontur weniger oder gar nicht begrenzt, derart, dass die Fahrradtasche von der Strebe des Gepäckträgers abhebbar ist.

13. Fahrradtasche nach Anspruch 12,
**dadurch gekennzeichnet,**
**dass** der Riegel (34) gemeinsam mit den Hakenteilen beweglich ist, und mit wenigsten einem der Hakenteile in der Art verbunden ist, dass der Riegel (34) in seine Gebrauchsstellung bewegt wird, wenn die Hakenteile in ihre Gebrauchsstellung bewegt werden und dass der Riegel (34) in seine Ruhestellung bewegt wird, wenn die Hakenteile in ihre Ruhestellung bewegt werden,
und **dass** der Riegel (34) gegen die Wirkung eines Rückstellelements aus seiner Gebrauchsstellung in seine Ruhestellung beweglich ist, während sich die Hakenteile in ihrer Gebrauchsstellung befinden.

14. Fahrradtasche nach Anspruch 13,
**dadurch gekennzeichnet,**
**dass** der Riegel (34) gelenkig an einen Hakenteil anschließt.

15. Fahrradtasche nach einem der vorhergehenden Ansprüche,
**gekennzeichnet durch**
ein Begrenzungselement, welches den Verschiebeweg des zweiten Hakenteils entlang der Führung begrenzt,
wobei das Begrenzungselement einstellbar ist, derart, dass in unterschiedlichen Stellungen des Begrenzungselements der Verschiebeweg des zweiten Hakenteils unterschiedlich lang ist.

## Claims

1. Bicycle bag
- having walls which delimit an interior space of the bicycle bag,
- wherein a rear wall is intended to be oriented in a manner facing the bicycle in a use position, in which the bicycle bag is attached to a luggage carrier of a bicycle,
- and having a folding hook which is intended to engage around a portion of the luggage carrier, and to hold the bicycle bag on the luggage carrier, in the use position of the bicycle bag, in which the latter is attached to a luggage carrier of a bicycle,
- wherein the folding hook is movable
- between a holding position, in which it protrudes outwards from the rear wall,
- and a rest position, in which it enters the contour of the bicycle bag contained by the walls to a greater extent than in the holding position,
- and wherein the folding hook has in each case two hook parts which are movable relative to one another, **characterized**
**in that** a first hook part is mounted in a movable manner and a second hook part is displaceable in a manner guided along a guide,
and the first hook part joins the second hook part in such a way that the displacement of the second hook part causes the first hook part to be moved between the rest position and the use position.

2. Bicycle bag according to Claim 1,
**characterized**
**in that** the two hook parts are each mounted in a pivotable manner,
and are connected to one another by way of a joint (8) whose joint pin extends parallel to the pivot pins of the two hook parts,
and wherein the second hook part is displaceable in such a way that its displacement brings about a change in the distance between the two pivot pins of the two hook parts and brings about respective pivoting movements of the two hook parts.

3. Bicycle bag according to Claim 2,
**characterized**
**in that** the joint pin of the joint (8) is outwardly offset in relation to an imaginary connecting line extending between the two pivot pins of the two hook parts.

4. Bicycle bag according to Claim 2 or 3,
**characterized**
**in that** one hook part is in the form of a yoke (1) with two yoke arms (4) and is pivotable around a yoke pin (5), and the other hook part is in the form of a hook (3) which is pivotable around a hook pin (7),
wherein the hook (3) extends between the yoke arms (4) of the yoke (1),
and the joint pin of the joint (8) extends through the yoke arms (4) and the hook (3) situated therebetween.

5. Bicycle bag according to Claim 4,
**characterized**
**in that** the hook (3), in the region in which it extends from the joint pin of the joint (8) and directed away from the hook pin (7) to a free end (2) of the hook (3), extends inwards when the folding hook is in its rest position.

6. Bicycle bag according to one of Claims 2 to 5,
**characterized**
**in that** the pivot pin of the displaceable hook part extends beyond said hook part and engages into a guide slot that forms the guide along which said hook part is displaceable.

7. Bicycle bag according to Claim 6,
**characterized**
**in that** guide slots extend on both sides of the displaceable hook part and the pivot pin of said hook part engages into both guide slots.

8. Bicycle bag according to one of Claims 2 to 7,
**characterized**
**in that** the pivot pin of a hook part is formed by two stub shafts that are formed on the hook part.

9. Bicycle bag according to one of the preceding claims,
**characterized**
**in that** a return spring (10) acts on a hook part in such a way that the folding hook is automatically displaced in a spring-loaded manner into its rest position,
and **in that** an actuating element joins a hook part in such a way that said hook part is movable into its holding position counter to the action of the return spring (10) by way of the actuating element.

10. Bicycle bag according to Claim 9,
**characterized**
**in that** the return spring (10) is arranged in a manner acting on the second hook part, which is displaceable along the guide.

11. Bicycle bag according to Claim 9 or 10,
**characterized**
**in that** the actuating element is in the form of a pull rope (14).

12. Bicycle bag according to one of the preceding claims,
**characterized by**
a bar (34) which is movable between a use position and a rest position,
wherein, in their use position, the hook parts provide a downwardly open receiving contour which is intended to receive a strut of the luggage carrier,
and wherein, in its use position, the bar (34) downwardly delimits said receiving contour in such a way that it secures the bicycle bag against lifting forces at the strut of the luggage carrier,
and wherein the bar (34) is movable from its use position into a rest position, in which it delimits the downwardly open receiving contour to a lesser extent or not at all, in such a way that the bicycle bag is able to be lifted off from the strut of the luggage carrier.

13. Bicycle bag according to Claim 12,
**characterized**
**in that** the bar (34) is movable together with the hook parts and is connected to at least one of the hook parts in such a way that the bar (34) is moved into its use position when the hook parts are moved into their use position, and in that the bar (34) is moved into its rest position when the hook parts are moved into their rest position,
and **in that** the bar (34) is movable from its use position into its rest position counter to the action of a return element while the hook parts are in their use position.

14. Bicycle bag according to Claim 13,
**characterized**
**in that** the bar (34) joins one hook part in an articulated manner.

15. Bicycle bag according to one of the preceding claims,
**characterized by**
a limiting element which limits the displacement travel of the second hook part along the guide,
wherein the limiting element is settable in such a way that the length of the displacement travel of the second hook part differs in different positions of the limiting element.

## Revendications

1. Sacoche de bicyclette,
- avec des parois qui délimitent un espace intérieur de la sacoche de bicyclette,
- une paroi arrière étant destinée à être orientée tournée vers la bicyclette dans une position d'utilisation dans laquelle la sacoche de bicyclette est accrochée à un porte-bagages d'une bicyclette,
- et avec un crochet rabattable destiné, dans la position d'utilisation de la sacoche de bicyclette, dans laquelle celle-ci est accrochée à un porte-bagages d'une bicyclette, à entourer une section du porte-bagages et à maintenir la sacoche de bicyclette sur le porte-bagages,
- le crochet rabattable étant mobile
- entre une position de maintien dans laquelle il dépasse de la paroi arrière vers l'extérieur
- et une position de repos dans laquelle il s'enfonce davantage dans le contour de la sacoche de bicyclette entouré par les parois que dans la position de maintien,
- et le crochet rabattable présentant deux parties de crochet mobiles l'une par rapport à l'autre,
**caractérisée**
**en ce qu'**une première partie de crochet est montée de manière mobile
et une deuxième partie de crochet peut coulisser de manière guidée le long d'un guide,
et la première partie de crochet se raccorde à la deuxième partie de crochet de telle manière que, par le coulissement de la deuxième partie de crochet, la première partie de crochet est déplacée entre la position de repos et la position d'utilisation.

2. Sacoche de bicyclette selon la revendication 1, **caractérisée**
**en ce que** les deux parties de crochet sont chacune montées de manière pivotante,
et sont reliées entre elles au moyen d'une articulation (8) dont l'axe d'articulation s'étend parallèlement aux axes de pivotement des deux parties de crochet,
et la deuxième partie de crochet pouvant coulisser de telle sorte que son coulissement provoque une modification de la distance entre les deux axes de pivotement des deux parties de crochet ainsi qu'un mouvement de pivotement respectif des deux parties de crochet.

3. Sacoche de bicyclette selon la revendication 2,
**caractérisée**
**en ce que** l'axe d'articulation de l'articulation (8) est décalé vers l'extérieur par rapport à une ligne de liaison imaginaire qui s'étend entre les deux axes de pivotement des deux parties de crochet.

4. Sacoche de bicyclette selon la revendication 2 ou 3,
**caractérisée**
**en ce qu'**une partie de crochet est conçue sous forme de fourche (1) avec deux dents de fourche (4) et peut pivoter autour d'un axe de fourche (5), et l'autre partie de crochet est conçue sous forme de crochet (3) qui peut pivoter autour d'un axe de crochet (7),
le crochet (3) s'étendant entre les dents de fourche (4) de la fourche (1),
et l'axe d'articulation (8) s'étendant à travers les dents de fourche (4) et le crochet (3) se trouvant entre celles-ci.

5. Sacoche de bicyclette selon la revendication 4,
**caractérisée**
**en ce que** le crochet (3) s'étend vers l'intérieur dans la zone dans laquelle il s'étend en étant détourné de l'axe d'articulation de l'articulation (8) et de l'axe de crochet (7) jusqu'à une extrémité libre (2) du crochet (3) lorsque le crochet rabattable se trouve dans sa position de repos.

6. Sacoche de bicyclette selon l'une quelconque des revendications 2 à 5,
**caractérisée**
**en ce que** l'axe de pivotement de la partie de crochet pouvant coulisser s'étend au-delà de cette partie de crochet et s'engage dans une fente de guidage qui forme le guidage le long duquel cette partie de crochet peut coulisser.

7. Sacoche de bicyclette selon la revendication 6,
**caractérisée**
**en ce que** des fentes de guidage s'étendent des deux côtés de la partie de crochet pouvant coulisser et l'axe de pivotement de cette partie de crochet s'engage dans les deux fentes de guidage.

8. Sacoche de bicyclette selon l'une quelconque des revendications 2 à 7,
**caractérisée**
**en ce que** l'axe de pivotement d'une partie de crochet est formé par deux tourillons d'arbre moulés sur la partie de crochet.

9. Sacoche de bicyclette selon l'une quelconque des revendications précédentes,
**caractérisée**
**en ce qu'**un ressort de rappel (10) agit sur une partie de crochet de telle manière que le crochet rabattable est automatiquement poussé dans sa position de repos de manière sollicitée par ressort,
et **en ce qu'**un élément d'actionnement est raccordé à une partie de crochet de telle manière que cette partie de crochet peut être déplacée dans sa position de maintien au moyen de l'élément d'actionnement contre l'action du ressort de rappel (10).

10. Sacoche de bicyclette selon la revendication 9,
**caractérisée**
**en ce que** le ressort de rappel (10) est agencé de manière à agir sur la deuxième partie de crochet pouvant coulisser le long du guide.

11. Sacoche de bicyclette selon la revendication 9 ou 10,
**caractérisée**
**en ce que** l'élément d'actionnement est conçu sous la forme d'un câble de traction (14).

12. Sacoche de bicyclette selon l'une quelconque des revendications précédentes,
**caractérisée par**
un verrou (34) qui est mobile entre une position d'utilisation et une position de repos,
les parties de crochet créant, dans leur position d'utilisation, un contour de réception ouvert vers le bas, destiné à recevoir une entretoise du porte-bagages, et le verrou (34), dans sa position d'utilisation, délimitant ce contour de réception vers le bas de manière à sécuriser la sacoche de bicyclette sur l'entretoise du porte-bagages contre les forces de soulèvement,
et le verrou (34) pouvant être déplacé de sa position d'utilisation vers une position de repos dans laquelle il délimite moins ou pas du tout le contour de réception ouvert vers le bas, de telle sorte que la sacoche de bicyclette peut être soulevée de l'entretoise du porte-bagages.

13. Sacoche de bicyclette selon la revendication 12,
**caractérisée**
**en ce que** le verrou (34) peut être déplacé conjointement avec les parties de crochet et est relié à au moins l'une des parties de crochet de telle manière que le verrou (34) est déplacé dans sa position d'utilisation lorsque les parties de crochet sont déplacés dans leur position d'utilisation et que le verrou (34) est déplacé dans sa position de repos lorsque les parties de crochet sont déplacés dans leur position de repos,
et que le verrou (34) peut être déplacé de sa position d'utilisation à sa position de repos contre l'action d'un élément de rappel, tandis que les parties de crochet se trouvent dans leur position d'utilisation.

14. Sacoche de bicyclette selon la revendication 13,
**caractérisée**
**en ce que** le verrou (34) est raccordé de manière articulée à une partie de crochet.

15. Sacoche de bicyclette selon l'une quelconque des revendications précédentes,
**caractérisée par**
un élément de délimitation qui délimite la course de coulissement de la deuxième partie de crochet le long du guide,
l'élément de délimitation étant réglable de telle sorte que, dans différentes positions de l'élément de délimitation, la course de coulissement de la deuxième partie de crochet soit de longueur différente.
